(19) Europäisches Patentamt
European Patent Office
Office européen des brevets

(11) EP 1 345 983 B1

(12) **EUROPÄISCHE PATENTSCHRIFT**

(45) Veröffentlichungstag und Bekanntmachung des Hinweises auf die Patenterteilung:
**12.01.2005 Patentblatt 2005/02**

(21) Anmeldenummer: **01270190.0**

(22) Anmeldetag: **11.12.2001**

(51) Int Cl.[7]: **C08G 67/02**, B01J 31/18, B01J 31/24

(86) Internationale Anmeldenummer:
**PCT/EP2001/014530**

(87) Internationale Veröffentlichungsnummer:
**WO 2002/048238 (20.06.2002 Gazette 2002/25)**

(54) **VERFAHREN ZUR HERSTELLUNG WÄSSRIGER COPOLYMERISATDISPERSIONEN VON COPOLYMERISATEN AUS KOHLENMONOXID UND WENIGSTENS EINER OLEFINISCH UNGESÄTTIGTEN VERBINDUNG**

METHOD OF PRODUCING AQUEOUS COPOLYMER DISPERSIONS FROM COPOLYMERS THAT COMPRISE CARBON MONOXIDE AND AT LEAST ONE OLEFINICALLY UNSATURATED COMPOUND

PROCEDE POUR PRODUIRE DES DISPERSIONS COPOLYMERES AQUEUSES DE COPOLYMERES A PARTIR DE MONOXYDE DE CARBONE ET D'AU MOINS UN COMPOSE OLEFINIQUEMENT INSATURE

(84) Benannte Vertragsstaaten:
**AT BE CH CY DE DK ES FI FR GB GR IE IT LI LU MC NL PT SE TR**

(30) Priorität: **12.12.2000 DE 10061877**

(43) Veröffentlichungstag der Anmeldung:
**24.09.2003 Patentblatt 2003/39**

(73) Patentinhaber: **BASF AKTIENGESELLSCHAFT
67056 Ludwigshafen (DE)**

(72) Erfinder:
- **SCHMID, Markus
67146 Deidesheim (DE)**
- **LINDNER, Ekkehard
72076 Tübingen (DE)**
- **WALD, Joachim
72458 Albstadt-Ebingen (DE)**
- **FÖRSTER, Monika
64367 Mühltal (DE)**
- **WEGNER, Peter
72074 Tübingen (DE)**

(56) Entgegenhaltungen:
**DE-A- 19 821 477** **DE-A- 19 917 920**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 1 345 983 B1

## Beschreibung

Die vorliegende Erfindung betrifft ein Verfahren zur Herstellung wässriger Copolymerisatdispersionen von Copolymerisaten aus Kohlenmonoxid und wenigstens einer olefinisch ungesättigten Verbindung.

Copolymerisate aus Kohlenmonoxid und olefinisch ungesättigten Verbindungen, auch kurz als Kohlenmonoxidcopolymerisate oder Polyketone bezeichnet, sind bekannt. Beispielsweise zeichnen sich hochmolekulare teilkristalline Polyketone mit streng alternierender Abfolge der Monomeren in der Hauptkette im allgemeinen durch hohe Schmelzpunkte, gute Wärmeformbeständigkeit, gute Chemikalienbeständigkeit, gute Barriereeigenschaften gegenüber Wasser und Luft sowie vorteilhaften mechanischen und rheologischen Eigenschaften aus.

Von technischem Interesse sind Polyketone aus Kohlenmonoxid und Olefinen, im allgemeinen $\alpha$-Olefinen, wie zum Beispiel Kohlenmonoxid-Ethen-, Kohlenmonoxid-Propen-, Kohlenmonoxid-Ethen-Propen-, Kohlenmonoxid-Ethen-Buten-1-, Kohlenmonoxid-Ethen-Hexen-1-, Kohlenmonoxid-Propen-Buten-1- oder Kohlenmonoxid-Propen-Hexen-1-Copolymerisate.

Übergangsmetallkatalysierte Verfahren zur Herstellung von Polyketonen sind bekannt. Beispielsweise wird in der EP-A 0 121 965 ein mit bidentaten Phosphinliganden chelatisierter cis-Palladiumkomplex, $[Pd(Ph_2P(CH_2)_3PPh_2)](OAc)_2$ (Ph = Phenyl, Ac = Acetyl), eingesetzt. Die Kohlenmonoxidcopolymerisation kann in Suspension, wie in der EP-A 0 305 011 beschrieben, oder in der Gasphase, beispielsweise gemäß EP-A 0 702 045, durchgeführt werden. Häufig eingesetzte Suspensionsmittel sind zum einen niedermolekulare Alkohole, insbesondere Methanol (s. a. EP-A 0 428 228), zum anderen unpolare oder polare aprotische Flüssigkeiten wie Dichlormethan, Toluol oder Tetrahydrofuran (vgl. EP-A 0 460 743 und EP-A 0 590 942). Als gut geeignet für die genannten Copolymerisationsverfahren haben sich insbesondere Komplexverbindungen mit Bisphosphinchelatliganden erwiesen, deren Reste am Phosphor Aryl- oder substituierte Arylgruppen darstellen. Besonders häufig werden demgemäß als Chelatliganden 1,3-Bis(diphenylphosphino)propan oder 1,3-Bis[di-(o-methoxyphenyl)phosphino)]propan eingesetzt (s.a. Drent et al., Chem. Rev., 1996, 96, S. 663 bis 681). Üblicherweise wird die Kohlenmonoxidcopolymerisation in den genannten Fällen in Gegenwart von Säuren durchgeführt.

Die Kohlenmonoxidcopolymerisation in niedermolekularen Alkoholen wie Methanol ist mit dem Nachteil behaftet, dass das sich bildende Kohlenmonoxidcopolymerisat eine hohe Aufnahmefähigkeit für diese Flüssigkeiten besitzt und bis zu 80 Vol.-% an z.B. Methanol durch das Kohlenmonoxidcopolymerisat gebunden bzw. aufgenommen werden. Demzufolge ist ein hoher Energieaufwand erforderlich, um die Kohlenmonoxidcopolymerisate zu trocknen und rein zu isolieren. Von Nachteil ist weiterhin, dass selbst nach einem intensiven Trocknungsvorgang immer noch Restmengen an Alkohol im Kohlenmonoxidcopolymerisat verbleiben. Eine Anwendung als Verpackungsmaterial für Lebensmittel scheidet damit für auf diese Art und Weise hergestellte Formmassen von vornherein aus. In der EP-A 0 485 035 wird die Verwendung von Zusätzen an Wasser in Anteilen von 2,5 bis 15 Gew.-% zum alkoholischen Suspensionsmittel vorgeschlagen, um die Restmengen an niedermolekularem Alkohol im Kohlenmonoxidcopolymerisat zu eliminieren. Allerdings führt auch diese Vorgehensweise nicht zu methanolfreien Copolymerisaten. Die Verwendung halogenierter Kohlenwasserstoffe oder Aromaten wie Dichlormethan oder Chlorbenzol bzw. Toluol bringt andererseits Probleme insbesondere bei der Handhabung und der Entsorgung mit sich.

Zur Umgehung der mit den genannten Suspensionsmitteln einhergehenden Nachteile wird von Jiang und Sen, Macromolecules, 1994, 27, S. 7215 bis 7216, die Herstellung von Kohlenmonoxidcopolymerisaten in wässrigen Systemen unter Verwendung eines Katalysatorsystems, bestehend aus $[Pd(CH_3CN)_4](BF_4)_2$ und 1,3-Bis[di-(3-benzolsulfonsäure)phosphino]propan als wasserlöslichem Chelatliganden, beschrieben. Allerdings ist die erzielte Katalysatoraktivität unbefriedigend.

Verspui et al., Chem. Commun., 1998, S. 401 bis 402, gelingt gegenüber Jiang und Sen die Steigerung der Katalysatoraktivität bei der Copolymerisation von Kohlenmonoxid und Ethen, indem sie den genannten Chelatliganden in wesentlich reinerer Form einsetzen. Weiterhin ist die Gegenwart einer Brönsted-Säure erforderlich, um zu gegenüber Jiang und Sen verbesserten Katalysatoraktivitäten zu gelangen. Die in der Publikation beschriebenen Polyketone, hergestellt aus Kohlenmonoxid und Ethylen, besitzen den Nachteil, dass ihr Molekulargewicht unter dem vergleichbarer, aber in Methanol als Lösungsmittel hergestellter Polyketone liegt.

Die vom Anmelder beim Deutschen Patent- und Markenamt unter der Anmeldenummer 19917920.4 eingereichte Anmeldung betrifft ein Verfahren zur metallkatalysierten Herstellung von linearen, alternierenden Copolymerisaten aus Kohlenmonoxid und einer olefinisch ungesättigten Verbindung mit drei bis zwanzig Kohlenstoffatomen in wässrigem Medium.

Von Bedeutung ist, dass alle im vorgenannten Stand der Technik aufgeführten Verfahren auf die Ausbildung von Copolymerisatagglomeraten, deren mittlere Teilchengröße in der Regel >> 2 $\mu$m ist, gerichtet sind, welche in einfacher Weise, beispielsweise durch Filtration, vom flüssigen Medium abgetrennt werden können. Durch die spezifische Ausgestaltung der Verfahren sollte dabei insbesondere die Bildung stabiler Copolymerisatdispersionen, deren mittlere Teilchengröße in der Regel $\leq$ 2 $\mu$m ist, vermieden werden.

Im Gegensatz hierzu lag der vorliegenden Erfindung die Aufgabe zugrunde, ein Verfahren zur Herstellung

wässriger Copolymerisatdispersionen von Copolymerisaten aus Kohlenmonoxid und wenigstens einer olefinisch ungesättigten Verbindung bereit zu stellen.

Demgemäß wurde ein Verfahren zur Herstellung wässriger Copolymerisatdispersionen von Copolymerisaten aus Kohlenmonoxid und wenigstens einer olefinisch ungesättigten Verbindung gefunden, das dadurch gekennzeichnet ist, dass man die Copolymerisation von Kohlenmonoxid und wenigstens einer olefinisch ungesättigten Verbindung in wässrigem Medium in Gegenwart von

a1) Metallkomplexen der allgemeinen Formel (I)

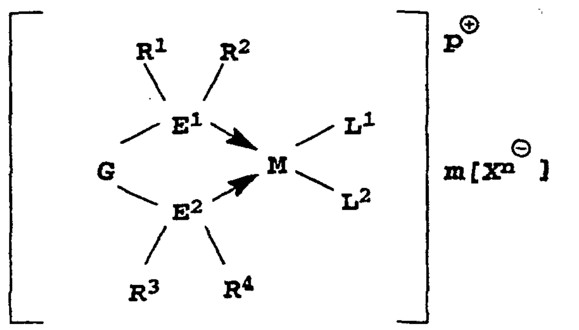

(I)

in der die Substituenten und Indizes die folgende Bedeutung haben:

G 5-, 6- oder 7-atomiges carbocyclisches Ringsystem ohne oder mit einem oder mehreren Heteroatomen, $-(CR^b{}_2)_r-$, $-(CR^b{}_2)_s-Si(R^a)_2-(CR^b{}_2)_t-$, -A-O-B- oder $-A-Z(R^5)-B-$ mit

$R^5$ Wasserstoff, unsubstituiertes oder mit funktionellen Gruppen , welche Atome der Gruppen IVA, VA, VIA oder VIIA des Periodensystems der Elemente enthalten, substituiertes $C_1$- bis $C_{20}$-Alkyl, $C_3$- bis $C_{14}$-Cycloalkyl, $C_6$- bis $C_{14}$-Aryl oder Alkylaryl mit 1 bis 20 C-Atomen im Alkylrest und 6 bis 14 C-Atomen im Arylrest, $-N(R^b)_2$, $-Si(R^c)_3$ oder einen Rest der allgemeinen Formel (II)

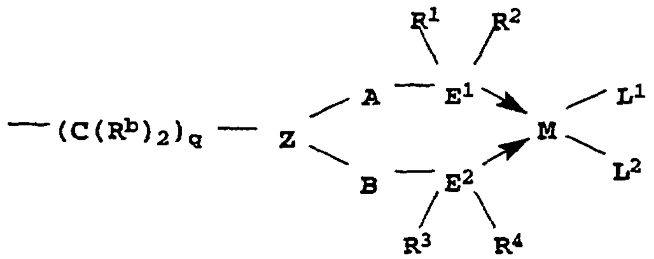

(II)

in der

q eine ganze Zahl von 0 bis 20 bedeutet und die weiteren Substituenten in Formel (II) die gleiche Bedeutung wie in Formel (I) haben,

A, B $-(CR^b{}_2)_{r'}-$, $-(CR^b{}_2)_s-Si(R^a)_2-(CR^b{}_2)_t-$, $-N(R^b)-$, ein r'-, s- oder t-atomiger Bestandteil eines Ringsystems oder zusammen mit Z ein (r'+1)-, (s+1)- oder (t+1)-atomiger Bestandteil eines Heterocyclus,

$R^a$ unabhängig voneinander lineares oder verzweigtes $C_1$- bis $C_{20}$-Alkyl, $C_3$- bis $C_{14}$-Cycloalkyl, $C_6$- bis $C_{14}$-Aryl oder Alkylaryl mit 1 bis 20 C-Atomen im Alkylteil und 6 bis 14 C-Atomen im Arylteil, wobei die genannten Reste auch substituiert sein können,

$R^b$ wie $R^a$, zusätzlich Wasserstoff oder $-Si(R^c)_3$,

$R^c$ unabhängig voneinander lineares oder verzweigtes $C_1$- bis $C_{20}$-Alkyl, $C_3$- bis $C_{14}$-Cycloalkyl, $C_6$- bis

$C_{14}$-Aryl oder Alkylaryl mit 1 bis 20 C-Atomen im Alkylteil und 6 bis 14 C-Atomen im Arylteil, wobei die genannten Reste auch substituiert sein können,

r 1, 2, 3 oder 4 und

r' 1 oder 2,

s, t 0, 1 oder 2, wobei $1 \leq s+t \leq 3$,

Z ein nichtmetallisches Element aus der Gruppe VA des Periodensystems der Elemente,

M ein Metall, ausgewählt aus den Gruppen VIIIB, IB oder IIB des Periodensystems der Elemente,

$E^1$, $E^2$ ein nichtmetallisches Element aus der Gruppe VA des Periodensystems der Elemente,

$R^1$ bis $R^4$ unabhängig voneinander lineares oder verzweigtes $C_2$- bis $C_{20}$-Alkyl, $C_3$- bis $C_{14}$-Cycloalkyl, $C_6$- bis $C_{14}$-Aryl oder Alkylaryl mit 1 bis 20 C-Atomen im Alkylteil und 6 bis 14 C-Atomen im Arylteil, wobei mindestens einer der Reste $R^1$ bis $R^4$ über mindestens eine Hydroxy-, Amino- oder Säuregruppe verfügt oder eine ionisch funktionelle Gruppe enthält,

$L^1$, $L^2$ formal geladene oder neutrale Liganden,

X formal ein- oder mehrwertige Anionen,

p 0, 1, 2, 3 oder 4,

m, n 0, 1, 2, 3 oder 4,

wobei $p = m \times n$,

b) einem Dispergiermittel und gegebenenfalls

c) einer Hydroxyverbindung
durchführt und als wenigstens eine olefinisch ungesättigte Verbindung eine das Strukturelement der allgemeinen Formel (III)

$$-CH=CH-Q-Pol_{\pi} \quad (III),$$

enthaltende Verbindung oder ein Gemisch aus einer das Strukturelement der allgemeinen Formel (III) enthaltenden Verbindung und einer olefinisch ungesättigten Verbindung mit 2 bis 20 Kohlenstoffatomen einsetzt,

wobei

Q eine unpolare organische Gruppe ist, ausgewählt aus der Gruppe umfassend lineares oder verzweigtes $C_1$- bis $C_{20}$-Alkyl, $C_3$- bis $C_{14}$-Cycloalkyl, $C_6$- bis $C_{14}$-Aryl, Alkylaryl mit 1 bis 20 C-Atomen im Alkylteil und 6 bis 14 C-Atomen im Arylteil und

$\pi$ eine ganze Zahl ungleich 0, bevorzugt 1, 2, 3 oder 4 ist und

Pol ein polarer Rest ist, ausgewählt aus der Gruppe umfassend

- Carboxyl, Sulfonyl, Sulfat, Phosphonyl, Phosphat sowie deren Alkalimetall-, Erdalkalimetall- und/oder Ammoniumsalze,

- Alkanolammonium-, Pyridinium-, Imidazolinium-, Oxazolinium-, Morpholinium-, Thiazolinium-, Chinolinium-, Isochinolinium-, Tropylium-, Sulfonium-, Guanidinium- und Phosphoniumverbindungen sowie Ammoniumverbindungen der allgemeinen Formel (IV)

$$-N^{\oplus}R^6R^7R^8 \quad (IV),$$

wobei $R^6$, $R^7$ und $R^8$ unabhängig voneinander für Wasserstoff und lineares oder verzweigtes $C_1$- bis $C_{20}$-Alkyl steht,

oder

- eine Gruppe der allgemeinen Formel (V), (VI) oder (VII)

$$-(EO)_k-(PO)_l-R^9 \quad (V),$$

$$-(PO)_l-(EO)_k-R^9 \quad (VI),$$

$$-(EO_k/PO_l)-R^9 \quad (VII),$$

wobei

EO für eine $-CH_2-CH_2-O$-Gruppe,

PO für eine $-CH_2-CH(CH_3)-O$- oder eine $-CH(CH_3)-CH_2-O$-Gruppe steht,

k und l für Zahlenwerte von 0 bis 50 stehen, wobei aber k und l nicht gleichzeitig 0 sind, und

$R^9$ Wasserstoff, lineares oder verzweigtes $C_1$- bis $C_{20}$-Alkyl oder $-SO_3H$ sowie dessen entsprechendes Alkalimetall-, Erdalkalimetall- und/oder Ammoniumsalz bedeutet.

Außerdem betrifft die Erfindung ein Verfahren, bei dem der Metallkomplex a1) nicht in Form einer definierten Verbindung vorgelegt, sondern vor und/oder bei der Copolymerisation in-situ aus den Einzelkomponenten gebildet wird.

Weiterhin betrifft die Erfindung ein Verfahren zur Herstellung wässriger Copolymerisatdispersionen von Copolymerisaten aus Kohlenmonoxid und wenigstens einer olefinisch ungesättigten Verbindung, in dem zusätzlich zu den genannten Komponenten a1) und b) beziehungsweise a1.1), a1.2) und b) eine Säure sowie gegebenenfalls eine Hydroxyverbindung verwendet wird.

Darüber hinaus betrifft die Erfindung die nach den Verfahren hergestellten wässrigen Copolymerisatdispersionen und deren Verwendung sowie die aus den wässrigen Copolymerisatdispersionen zugänglichen Copolymerisatpulver und deren Verwendung.

Den Bezeichnungen für die Gruppen des Periodensystems der Elemente liegt die vom Chemical Abstracts Service bis 1986 verwendete Nomenklatur zugrunde (so enthält beispielsweise die Gruppe VA die Elemente N, P, As, Sb, Bi; die Gruppe IB enthält Cu, Ag, Au).

Bei einem bevorzugten erfindungsgemäßen Verfahren wird die Copolymerisation in Gegenwart von

a1) einem wasserlöslichen Metallkomplex der allgemeinen Formel (Ia)

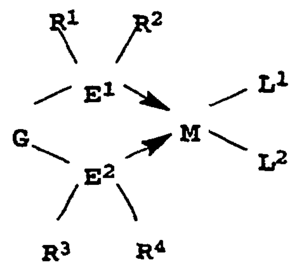

(Ia)

in der die Substituenten und Indizes die folgende Bedeutung haben:

| | |
|---|---|
| G | $-(CR^b_2)_r-$ oder $-(CR^b_2)-N(R^5)-(CR^b_2)-$, worin |
| $R^b$ | Wasserstoff, $C_1$- bis $C_{10}$-Alkyl oder $C_6$- bis $C_{10}$-Aryl, |
| r | 1, 2, 3 oder 4, |
| $R^5$ | Wasserstoff, lineares oder verzweigtes $C_1$- bis $C_{10}$-Alkyl, $C_3$- bis $C_{10}$-Cycloalkyl, $C_6$- bis $C_{14}$-Aryl, mit funktionellen Gruppen, welche Atome der Gruppen IVA, VA, VIA, oder VIIA des Periodensystems der Elemente enthalten, |
| M | Palladium oder Nickel |
| $E^1$, $E^2$ | Phosphor, |
| $R^1$ bis $R^4$ | lineare, verzweigte oder Carbocyclen enthaltende $C_2$- bis $C_{20}$-Alkyleinheiten, $C_3$- bis $C_{14}$-Cycloalkyleinheiten, $C_6$- bis $C_{14}$-Aryleinheiten oder Alkylarylgruppen mit 1 bis 20 C-Atomen im Alkylteil und 6 bis 14 C-Atomen im Arylteil, wobei mindestens einer der Reste $R^1$ bis $R^4$ über mindestens eine endständige, interne oder als Substituent vorhandene Hydroxy-, Amino-, Carbonsäure-, Phosphorsäure-, Ammonium- oder Sulfonsäuregruppe verfügt, |
| $L^1$, $L^2$ | Acetat, Trifluoracetat, Tosylat oder Halogenide, |

a2) Schwefelsäure, p-Toluolsulfonsäure, Tetrafluorborsäure, Trifluormethansulfonsäure, Perchlorsäure oder Trifluoressigsäure als Protonensäure oder Bortrifluorid, Antimonpentafluorid oder Triarylborane als Lewis-Säure

b) einem anionischen, kationischen, und/oder nichtionischen Emulgator und

c) einem ein- oder mehrwertigen Alkohol und/oder einem Zucker

durchgeführt.

In einer weiteren Ausführungsform ist ein Verfahren bevorzugt, in dem der Metallkomplex a1) unter den Substituenten $R^1$ bis $R^4$ mindestens einen Rest aufweist, der mit mindestens einer freien Carbonsäure- oder Sulfonsäuregruppe substituiertes $C_2$- bis $C_{20}$-Alkyl, $C_3$- bis $C_{14}$-Cycloalkyl, $C_6$- bis $C_{14}$-Aryl oder Alkylaryl mit 1 bis 20 C-Atomen im Alkylteil und 6 bis 14 C-Atomen im Arylteil, darstellt, wobei vollständig auf die Anwesenheit von externen Säuren a2) verzichtet wird.

In einem weiteren erfindungsgemäßen Verfahren wird der Metallkomplex a1) nicht vorab hergestellt und in definierter Form bei der Copolymerisation verwendet, sondern erst durch Zugabe der Metallkomponente a1.1) und des Chelatliganden a1.2) zu den Edukten der Copolymerisation in-situ erzeugt.

Grundsätzlich sind als Bestandteil der Metallkomplexe a1) bzw. als Chelatligand a1.2) im erfindungsgemäßen Verfahren bidentate Chelatliganden der allgemeinen Formel $(R^1)(R^2)E^1\text{-}G\text{-}E^2(R^3)(R^4)$ (VIII) geeignet, in der die Substituenten und Indizes die vorgenannte Bedeutung haben.

Die verbrückende Struktureinheit G in den Metallkomplexen a1) bzw. den Chelatliganden a1.2) des erfindungsgemäßen Verfahrens besteht im allgemeinen aus ein- oder mehratomigen Brückensegmenten. Unter einer verbrückenden Struktureinheit wird grundsätzlich eine Gruppierung verstanden, die die Elemente $E^1$ und $E^2$ miteinander verbindet. Unter solche Struktureinheiten fallen beispielsweise substituierte oder unsubstituierte Alkylenketten oder

solche Alkylenketten, in denen eine Alkyleneinheit durch eine Silylengruppe, eine Amino- oder Phosphinogruppe oder durch einen Ethersauerstoff ersetzt sind.

Die verbrückende Struktureinheit G kann weiterhin ein 5-, 6- oder 7-atomiges carbocyclisches Ringsystem ohne oder mit einem oder mehreren Heteroatomen sein. Das Ringsystem kann aliphatisch oder aromatisch sein. Bevorzugt sind 5- oder 6-atomige Ringsysteme mit 0, 1 oder 2 Heteroatomen, ausgewählt aus N, O oder S.

Die Bindungen zu den Atomen $E^1$ und $E^2$ können relativ zueinander jede beliebige Position einnehmen. Bevorzugte relative Positionen zueinander sind die 1,2-, die 1,3- und die 1,4-Positionen.

Bevorzugte Ausführungsformen für cyclische Struktureinheiten G sind die folgenden (Bindungsstellen zu $E^1$ bzw. $E^2$ sind gekennzeichnet):

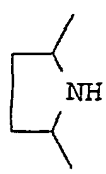 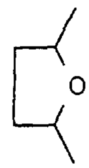 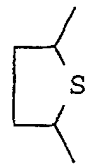

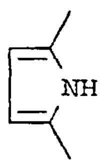 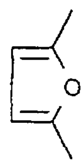 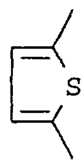

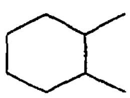 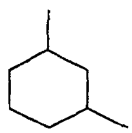 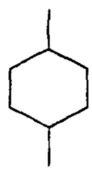 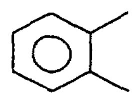 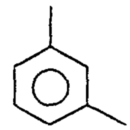 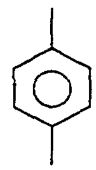

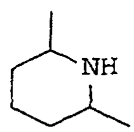 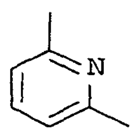 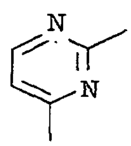

Unter den einatomig verbrückten Struktureinheiten sind solche mit einem verbrückenden Atom aus der Gruppe IVA des Periodensystems der Elemente wie $-C(R^b)_2-$ oder $-Si(R^a)_2-$, worin $R^a$ unabhängig voneinander insbesondere für lineares oder verzweigtes $C_1$- bis $C_{10}$-Alkyl, beispielsweise Methyl, Ethyl, i-Propyl oder t-Butyl, $C_3$- bis $C_6$-Cycloalkyl, wie Cyclopropyl oder Cyclohexyl, $C_6$- bis $C_{10}$-Aryl, wie Phenyl oder Naphthyl, mit funktionellen Gruppen, welche nichtmetallische Elemente der Gruppen IVA, VA, VIA oder VIIA des Periodensystems der Elemente enthalten, substituiertes $C_6$- bis $C_{10}$-Aryl, beispielsweise Tolyl, (Trifluormethyl)phenyl, Dimethylaminophenyl, p-Methoxyphenyl oder partiell oder perhalogeniertes Phenyl, Aralkyl mit 1 bis 6 C-Atomen im Alkylteil und 6 bis 10 C-Atomen im Arylteil, beispielsweise Benzyl, und $R^b$ insbesondere für Wasserstoff und daneben für die vorstehend für $R^a$ angegebenen Bedeutungen stehen, bevorzugt. $R^a$ stellt insbesondere eine Methylgruppe, $R^b$ insbesondere Wasserstoff dar.

Unter den mehratomig verbrückten Systemen sind die zwei-, dreiund vieratomig verbrückten Struktureinheiten hervorzuheben, wobei die dreiatomig verbrückten Systeme in der Regel bevorzugt eingesetzt werden.

Geeignete dreiatomig verbrückte Struktureinheiten basieren im allgemeinen auf einer Kette aus Kohlenstoffatomen, also zum Beispiel Propylen ($-CH_2CH_2CH_2-$), oder auf einer Brückeneinheit mit einem Heteroatom aus der Gruppe IVA, VA oder VIA des Periodensystems der Elemente, wie Silicium, Stickstoff, Phosphor oder Sauerstoff im Kettengerüst.

Die Brückenkohlenstoffatome können im allgemeinen mit $C_1$- bis $C_6$-Alkyl, wie Methyl, Ethyl oder t-Butyl, $C_6$- bis $C_{10}$-Aryl, wie Phenyl oder durch funktionelle Gruppen, welche Elemente der Gruppen IVA, VA, VIA oder VIIA der

Periodensystems der Elemente enthalten, also beispielsweise Triorganosilyl, Dialkylamino, Alkoxy, Hydroxy oder Halogen substituiert sein. Geeignete substituierte Propylenbrücken sind zum Beispiel solche mit einer Methyl-, Phenyl-, Hydroxy-, Trifluormethyl-, ω-Hydroxyalkyl- oder Methoxygruppe in 2-Position.

Unter den mehratomig verbrückten Struktureinheiten mit einem Heteroatom im Kettengerüst werden vorteilhaft Verbindungen eingesetzt, in denen Z Stickstoff oder Phosphor, insbesondere Stickstoff bedeutet (s.a. Formel (I)). Der Substituent $R^5$ an Z kann insbesondere bedeuten: Wasserstoff, lineares oder verzweigtes $C_1$bis $C_{20}$-Alkyl, insbesondere $C_1$- bis $C_{18}$-Alkyl, wie Methyl, Ethyl, i-Propyl, t-Butyl, n-Hexyl oder n-Dodecyl, $C_3$- bis $C_{14}$-Cycloalkyl, insbesondere $C_3$- bis $C_8$-Cycloalkyl, wie Cyclopropyl oder Cyclohexyl, $C_6$- bis $C_{14}$-Aryl, insbesondere $C_6$- bis $C_{10}$-Aryl, beispielsweise Phenyl, oder Alkylaryl mit 1 bis 20 C-Atomen im Alkylrest und 6 bis 10 C-Atomen im Arylrest, beispielsweise Benzyl.

Die genannten Alkyl- und Arylreste können unsubstituiert oder substituiert sein. Als Substituenten kommen zum Beispiel funktionelle Gruppen, welche Atome der Gruppen IVA, VA, VIA oder VIIA des Periodensystems der Elemente enthalten, in Betracht. Geeignet sind u.a. Triorganosilylgruppen wie Trimethylsilyl oder t-Butyldiphenylsilyl, die Carbonsäuregruppe oder Carbonsäurederivate, wie Ester oder Amide, primäre, sekundäre oder tertiäre Aminogruppen wie Dimethylamino oder Methylphenylamino, die Nitro- und die Hydroxygruppe, des weiteren Alkoxyreste, wie Methoxy oder Ethoxy, die Sulfonatgruppe sowie Halogenatome, wie Fluor, Chlor oder Brom. Aryl bedeutet im Sinne der vorliegenden Erfindung auch substituiertes und unsubstituiertes Heteroaryl, also zum Beispiel Pyridyl oder Pyrrolyl. Unter Alkylreste $R^5$ fallen ebenfalls langkettige Alkylengruppen mit 12 bis 20 C-Atomen in der Kette, die auch über Funktionalitäten wie die Sulfonsäure-, Carbonsäure-, Phosphorsäure-, Hydroxy-, Amino- oder Ammoniumgruppe, zum Beispiel in endständiger Position, verfügen können sowie Reste der allgemeinen Formel (IX)

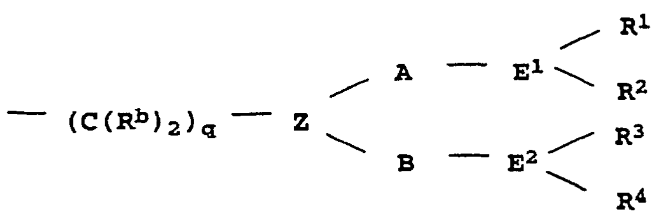

(IX)

in der q eine ganze Zahl von 0 bis 20 bedeutet und die weiteren Substituenten in Formel (IX) die gleiche Bedeutung wie in Formel (II) haben.

Bevorzugt sind als Reste $R^5$ auch solche Verbindungen, die einen elektronenziehenden Substituenten darstellen. Geeignet als elektronenziehende Substituenten sind zum Beispiel Alkylgruppen mit einem oder mehreren elektronenziehenden Resten wie Fluor, Chlor, Nitril oder Nitro in α- oder β-Position zu Z. Weiterhin geeignet sind Arylgruppen mit den genannten elektronenziehenden Resten sowie als direkt an Z gebundene Reste, auch die Nitril-, Sulfonat und Nitrogruppe. Als geeignete elektronenziehende Alkylreste seien beispielhaft die Trifluormethyl-, Trichlorethyl-, Difluormethyl-, 2,2,2-Trifluorethyl-, Nitromethyl- und die Cyanomethylgruppe genannt. Als geeignete elektronenziehende Arylreste seien beispielhaft genannt: m-, p-, o-Fluor- oder Chlorphenyl, 2,4-Difluorphenyl, 2,4-Dichlorphenyl, 2,4,6-Trifluorphenyl, 3,5-Bis(tri-fluormethyl)phenyl, Nitrophenyl, 2-Chlor-5-nitrophenyl und 2-Brom-5-nitrophenyl. In diesem Zusammenhang kommen gleichfalls Carbonyleinheiten als Reste $R^5$ in Frage, so dass, wenn Z Stickstoff bedeutet, Z und $R^5$ eine Carbonsäureamidfunktionalität ausbilden. Als ein solcher geeigneter Rest seien die Acetyl- oder die Trifluoracetylgruppe genannt.

Unter den Resten $R^5$ sind insbesondere bevorzugt t-Butyl, Phenyl, p-Fluorphenyl, Trifluormethyl, 2,2,2-Trifluorethyl, Pentafluorphenyl, 3,5-Bis(trifluormethyl)phenyl sowie ortho-, z.B. 3,4-, meta-, z.B. 2,4-, oder para-, z.B. 2,5-Difluorphenyl.

Als Einheiten A und B gemäß den Formeln (II) und (IX) kommen $C_1$bis $C_4$-Alkyleneinheiten in substituierter oder unsubstituierter Form in Frage, also beispielsweise Methylen, Ethylen, Propylen oder Ethyliden, Propyliden sowie Benzyliden. Bevorzugt werden Methylen, Ethylen, Ethyliden oder Benzyliden, besonders bevorzugt Methylen eingesetzt.

A und B können ebenfalls ein ein-, zwei-, drei- oder vieratomiger Bestandteil eines aliphatischen oder aromatischen Ringsystems sein. Zum Beispiel können A und B eine Methylen- oder Ethyleneinheit eines Cyclopropyl-, Cyclopentyl- oder Cyclohexylrings darstellen. Als Ringsysteme kommen auch aliphatische und aromatische Heterocyclen in Betracht.

A und B können des weiteren Bestandteile eines Heterocyclus sein, der aus den Komponenten A-Z($R^5$)-B, A-Z-$R^5$ bzw. B-Z-$R^5$ gebildet wird. A-Z-$R^5$ bzw. B-Z-$R^5$ können z.B. einen substituierten oder unsubstituierten Pyrrolidin- oder Piperidinring ausbilden.

Als chelatisierend wirkende Atome $E^1$ und $E^2$ kommen unabhängig voneinander die nichtmetallischen Elemente der Gruppe VA des Periodensystems der Elemente in Frage, wobei bevorzugt auf Stickstoff und Phosphor, insbesondere Phosphor zurückgegriffen wird. In einer bevorzugten Ausführungsform stellen $E^1$ und $E^2$ in den Verbindungen gemäß den Formeln (I) und (II) sowie (VIII) und (IX) Phosphor dar.

In dem erfindungsgemäßen Verfahren stellen die Reste $R^1$ bis $R^4$ substituiertes $C_2$- bis $C_{20}$-Alkyl, vorzugsweise $C_3$- bis $C_{18}$-Alkyl, $C_3$- bis $C_{14}$-Cycloalkyl, vorzugsweise $C_3$- bis $C_8$-Cycloalkyl, $C_6$- bis $C_{14}$-Aryl, vorzugsweise $C_6$- bis $C_{10}$-Aryl oder Alkylaryl mit 1 bis 20, vorzugsweise 3 bis 18 C-Atomen im Alkylteil und 6 bis 14, vorzugsweise 6 bis 10 C-Atomen im Arylteil dar, wobei mindestens einer, bevorzugt mehrere, besonders bevorzugt alle der Reste $R^1$ bis $R^4$ über mindestens eine Hydroxy-, Amino- oder Säuregruppe verfügen oder eine ionisch funktionelle Gruppe enthalten. Ionisch funktionelle Gruppen sind Gruppen auf der Basis von nichtmetallischen Elementen der Gruppen IVA bis VIA des Periodensystems der Elemente, z.B. Sulfonat, Phosphat, Ammonium, Carboxylat. Vorzugsweise stehen $R^1$ bis $R^4$ für lineare, verzweigte oder Carbocyclen enthaltende $C_2$- bis $C_{20}$-Alkyleinheiten oder $C_3$- bis $C_{14}$-Cycloalkyleinheiten, oder $C_6$- bis $C_{14}$- Aryleinheiten oder Alkylarylgruppen mit 1 bis 20 C-Atomen im Alkylteil und 6 bis 14 C-Atomen im Arylteil, wobei mindestens einer, bevorzugt mehrere, besonders bevorzugt alle der Reste mindestens eine Hydroxy-, Carbonsäure-, Phosphorsäure-, Ammonium-, Amino- oder Sulfonsäuregruppe enthalten.

Es können auch die Salze der Carbon-, Phosphor- oder Sulfonsäuren eingesetzt werden. Geeignete Salze sind zum Beispiel Ammonium-, Alkylammonium-, Arylammonium-, Alkali- oder Erdalkalisalze, wie Natrium-, Kalium- oder Magnesiumcarboxylate oder -sulfonate.

Als Gegenionen für die genannten Ammoniumreste kommen insbesondere nicht-nucleophile Anionen, wie sie auch für die Metallkomplexe a1) verwendet werden (siehe Anionen X), in Frage. Besonders geeignet sind zum Beispiel Sulfat, Nitrat, Acetat, p-Toluolsulfonat, Tetrafluoroborat, Trifluoracetat, Trichloracetat, Hexafluorophoshat, Hexafluoroantimonat oder Tetraarylborate.

Besonders geeignete Arylreste $R^1$ bis $R^4$ sind beispielsweise Aryleinheiten mit oder ohne einem oder mehreren, z.B. 1 bis 3, Heteroatomen im Ring, die mit ein oder zwei Hydroxy-, Carbonsäure-, Sulfonsäure- oder Aminogruppen substituiert sind. Unter den Aryl- bzw. Arylenresten $R^1$ bis $R^4$ wird der Phenyl(en)rest bevorzugt. Des weiteren können die Reste $R^1$ bis $R^4$ auch mehr als zwei polare Gruppen aufweisen und zum Beispiel über vier oder sechs Hydroxy-, Ammonium- oder Carbonsäuregruppen verfügen. Als cycloaliphatische Reste $R^1$ bis $R^4$ sind die Cyclopentyl- und die Cyclohexylreste bevorzugt. Besonders geeignete Alkylreste $R^1$ bis $R^4$ sind auch beispielsweise Alkyleneinheiten mit einer oder zwei endständigen Hydroxy-, Carbonsäure-, Sulfonsäure- oder -Ammoniumgruppen. Auch in diesen Fällen können die Reste $R^1$ bis $R^4$ mehr als zwei polare Gruppen aufweisen und zum Beispiel über vier oder sechs Hydroxy-, Ammonium- oder Carbonsäuregruppen verfügen. Demgemäß können die Reste $R^1$ bis $R^4$ jeweils auch über unterschiedliche funktionelle Gruppen verfügen. Auch können die Reste $R^1$ bis $R^4$ funktionelle Gruppen in voneinander unterschiedlicher Anzahl aufweisen. Als geeignete funktionelle Gruppen kommen beispielsweise die Hydroxy-, Amino-, Carbonsäure-, Phosphorsäure-, Ammonium- und die Sulfonsäuregruppe in Frage.

Die Herstellung geeigneter propylenverbrückter Chelatligandverbindungen kann beispielsweise ausgehend von dem kommerziell erhältlichen 1,3-Dibrompropan vorgenommen werden. Über eine doppelte Arbuzov-Reaktion, zum Beispiel mit Triethylphosphit, gelangt man zu 1,3-Bisphosphonsäurederivaten, die sich reduktiv, wie in "Methoden der organischen Chemie (Houben-Weyl)", 4. Aufl., Band XII/1, Teil 1, Georg Thieme Verlag, 1963, S. 62, beschrieben, in 1,3-Diphosphinopropan überführen lassen. 1,3-Diphosphinopropan eröffnet über eine Hydrophosphinierungsreaktion mit funktionalisierten Olefinen einen flexiblen Zugang zu substituierten Bisphosphinen. Die Hydrophosphinierung verläuft im allgemeinen über einen radikalischen Mechanismus und kann thermisch, photochemisch oder mit Hilfe eines Radikalstarters initiiert werden. Für eine thermische Initiierung sind im allgemeinen Temperaturen im Bereich von 20 bis 100°C und Drücke von 0,1 bis 5 bar erforderlich. Als Radikalstarter sind zum Beispiel Di-t-butyl-peroxid oder Azo-bis-[isobuttersäurenitril] geeignet. Zur photochemischen Initiierung reicht in der Regel bereits die UV-Bestrahlung mit einer Hg-Hochdrucklampe über einen Zeitraum von 2 bis 48 Stunden für eine quantitative Hydrophosphinierung aus. Über radikalisch initiierte Verfahren werden bei der Hydrophosphinierung im allgemeinen Anti-Markovnikov-Produkte erhalten.

Für die Herstellung von Chelatliganden mit Resten $R^1$ bis $R^4$, die Carbonsäuregruppen tragen, hat es sich als vorteilhaft erwiesen, zunächst von olefinisch ungesättigten Verbindungen auszugehen, die mit entsprechenden Carbonsäureestergruppen derivatisiert sind, und diese in der Hydrophosphinierungsreaktion einzusetzen. Anschließend können die freien Carbonsäuren mittels Verseifung nach bekannten Methoden gewonnen werden.

Daneben gelingt die Darstellung geeigneter Chelatligandverbindungen auch unter sauer katalysierten Bedingungen. Die nach diesem Verfahren erhaltenen Produkte fallen infolge der Isomerisierung der olefinischen Doppelbindung unter den sauren Reaktionsbedingungen häufig als Gemisch an. Der Verfahrensschritt der Hydrophosphinierung findet sich z.B. in "Methoden der organischen Chemie (Houben-Weyl)", 4. Aufl., Band XII/1, Teil 1, Georg Thieme Verlag, 1963, S. 25 bis 28, beschrieben.

Im allgemeinen sind für die genannte Hydrophosphinierungsreaktion alle Olefine geeignet, die unter diese Verbindungsklasse fallen, sofern sie über entsprechende funktionelle Gruppen, wie zum Beispiel Hydroxy-, Amino-, Carbonsäure-, Phosphorsäure-, Ammoniumund Sulfonsäuregruppen, verfügen. In Frage kommen beispielsweise Pro-

penylreste sowie $C_4$- bis $C_{20}$-Alkene mit mindestens einer internen oder endständigen Doppelbindung, die über mindestens eine Hydroxy-, Amino-, Carbonsäure-, Phosphorsäure-, Ammonium- oder Sulfonsäuregruppe verfügen. In Frage kommen ebenfalls olefinische Verbindungen mit aromatischen Resten, wobei die funktionelle Gruppe sowohl am aliphatischen als auch am aromatischen Rest vorliegen kann, also beispielsweise 4-(1-Penten)-benzoesäure oder 3-Phenyl-pent-5-en-carbonsäure. Weiterhin sind olefinische Verbindungen mit aliphatischen Carbocyclen in der Alkylenkette als Substituent geeignet. Des weiteren können auch cyclische Olefine wie Cyclohexen-3-ol oder Cycloocten-4-ol verwendet werden. Selbstverständlich kann auch auf Olefine mit mehreren funktionellen Gruppen ausgewählt aus Hydroxy-, Amino-, Carbonsäure-, Phosphorsäure-, Ammonium- und Sulfonsäuregruppen zurückgegriffen werden. Bevorzugt setzt man bei der Hydrophosphinierungsreaktion der $\alpha,\omega$-Bisphosphine geeignete Alkene mit $\alpha$-olefinischer Doppelbindung ein. Als solche kommen zum Beispiel auch heteroatomhaltige $\alpha$-Olefine, wie (Meth)acrylsäureester oder -amide sowie Homoallyloder Allylalkohole in Betracht.

Im Fall von aromatischen Resten $R^1$ bis $R^4$ können Chelatliganden, die Sulfonsäuregruppen enthalten, durch Umsetzung nicht-sulfonsäurehaltiger Chelatliganden mit Schwefeltrioxid, Chlorsulfonsäure, rauchender Schwefelsäure oder Oleum hergestellt werden, wie dies in Jiang et al., Macromolecules 27 (1994) S. 7215 bis 7216 oder Verspui et al., Chem. Commun., 1998, S. 401 bis 402 bzw. in J. March "Advanced Organic Chemistry", John Wiley & Sons (NY), 1985, 3rd Edition S. 473 bis 475 beschrieben ist.

Weitere Synthesen für Chelatliganden mit aromatischen Resten $R^1$ bis $R^4$ sind beschrieben in:

- "Phosphorus - An outline of its Chemistry, Biochemistry and Technical Chemistry" D.E.C. Corbridge, Elsevier (Amsterdam, Tokyo, New York) 1990, 4th. Edition, Chapter 8, und darin zitierte Literatur

- S.O. Grim, R.C. Barth, J. of Organomet. Chem. 94, 1975, S. 327

- WO98/22482

Besonders bevorzugt wird auf Reste $R^1$ bis $R^4$ zurückgegriffen, bei denen die durch funktionelle Gruppen, zum Beispiel Hydroxy-, Amino-, Carbonsäure-, Phosphorsäure-, Ammonium- oder Sulfonsäuregruppen, induzierte Hydrophilie ausreicht, den Metallkomplex a1) vollständig wasserlöslich zu machen. Je größer die Anzahl der funktionellen Gruppen an den Resten $R^1$ bis $R^4$ ist, um so größer kann auch der lipophile aliphatische, aromatische oder aliphatisch-aromatische Anteil sein. Bevorzugt sind zum Beispiel als Reste $R^1$ bis $R^4$ mit jeweils einer Hydroxygruppe solche mit 2 bis 15 C-Atomen in der Alkyleinheit oder 6 bis 14 C-Atomen in der Aryleinheit.

In einer besonders bevorzugten Ausführungsform des Chelatliganden verfügen die Reste $R^1$ bis $R^4$ als Arylsubstituenten mit einer Hydroxygruppe über 6 bis 14, insbesondere 6 bis 10 C-Atome, als Arylsubstituenten mit einer Carbonsäuregruppe über 6 bis 14, insbesondere 6 bis 10 C-Atome, als Arylsubstituenten mit einer Sulfonsäuregruppe über 6 bis 14, sowie als Arylsubstituenten mit einer Ammoniumgruppe über 6 bis 14 C-Atome.

Geeignet als Chelatliganden sind beispielsweise 1,3-Bis[di-(hydroxyphenyl)phosphino]propan, 1,3-Bis[di-(benzolsulfonsäure)phospino]propan, bevorzugt als meta-Isomer, sowie dessen Salze, 1,3-Bis[di-(carboxyphenyl)phospino]propan sowie dessen Salze, 1,3-Bis[di-(o-methoxyhydroxyphenyl)phosphino]propan 1,3-Bis[di-(4-(benzolsulfonsäure)butyl)phosphino]propan, Na-Salz, 1,3-Bis[di-(5-(benzolsulfonsäure)pentyl)phosphino]propan, Na-Salz.

Besonders bevorzugt unter den genannten Chelatligandverbindungen sind jene, in denen die Reste $R^1$ bis $R^4$ einen mit einer oder mehreren, z.B. 1 bis 3, Hydroxy-, Sulfonsäure oder Carbonsäuregruppen substituierten Phenylrest darstellen.

In einer besonders bevorzugten Ausführungsform des Chelatliganden verfügen die Reste $R^1$ bis $R^4$ als Alkylsubstituenten mit einer Hydroxygruppe über 4 bis 12, insbesondere 4 bis 7 C-Atome, als Alkylsubstituenten mit einer Carbonsäuregruppe über 4 bis 15, insbesondere 5 bis 12 C-Atome, als Alkylsubstituenten mit einer Sulfonsäuregruppe über 4 bis 18, insbesondere 5 bis 15 C-Atome sowie als Alkylsubstituenten mit einer Ammoniumgruppe über 4 bis 20, insbesondere 5 bis 18 C-Atome.

Geeignet als Chelatliganden sind beispielsweise 1,3-Bis[di-(4-hydroxybutyl)phosphino]propan, 1,3-Bis[di-(5-hydroxypentyl)phosphino]propan, 1,3-Bis[di-(6-hydroxyhexyl)phosphino]propan, 1,3-Bis[di-(7-hydroxyheptyl)phosphino]propan, 1,3-Bis[di-(8-hydroxyoctyl)phosphino]propan, 1,3-Bis{di-[(3-hydroxycyclopentyl)propyl]phosphino}propan, 1,3-Bis[di-(5-sulfonatopentyl)phosphino]propan, 1,3-Bis[di-(6-sulfonatohexyl)phosphino]propan, 1,3-Bis[di-(7-sulfonatoheptyl)phosphino]propan, 1,3-Bis[di-(8-sulfonatoocty)phosphino]propan, 1,3-Bis{di[(3-sulfonatocyclopentyl)propyl]phosphino}propan, 1,3-Bis[di-(5-carboxypentyl)phosphino]propan, 1,3-Bis[di-(propylmalonsäure)phosphino]propan, 1,3-Bis[di-(6-carboxyhexyl)phosphino]propan, 1,3-Bis[di-(7-carboxyheptyl)phosphino]propan, 1,3-Bis[di-(8-carboxyoctyl)phosphino]propan, N,N-Bis[di-(4-hydroxybutyl)phosphinomethyl]phenylamin, N,N-Bis[di-(5-hydroxypentyl)phosphinomethyl]phenylamin, N,N-Bis[di-(6-hydroxyhexyl)phosphinomethyl]phenylamin, N,N-Bis[di-(7-hydroxyheptyl)phosphinomethyl]phenylamin, N,N-Bis[di-(8-hydroxyoctyl)phosphinomethyl]phenylamin, N,N-Bis{di[(3-hydroxycyclopentyl)propyl]}phenylamin, N,N-Bis[di-(5-sulfonatopentyl)phosphinomethyl]phenylamin, N,N-Bis[di-(6-sulfonatohexyl)phosphinomethyl]phenylamin, N,N-Bis[di-(7-sulfonatoheptyl)phosphinomethyl]phenylamin, N,N-Bis[di-(8-sulfonatooctyl)phosphinomethyl]phenylamin, N,N-Bis{di[(3-sulfonatocyclopentyl)propyl]phosphinomethyl}phenylamin, N,N-Bis[di-(5-carboxypentyl)phosphinomethyl]phenylamin N,N-Bis[di-(6-carboxyhexyl)phosphinomethyl]phenylamin, N,N-Bis[di-(7-carboxyheptyl)phosphinomethyl]phenylamin, N,N-Bis[di-(8-carboxyoctyl)phosphinomethyl]phenylamin und 1,3-Bis[di-(4-methylol-5-hydroxyisopentyl)phosphino]propan.

Besonders bevorzugt unter den genannten Chelatligandverbindungen sind jene, in denen die Reste $R^1$ bis $R^4$ einen mit einer Hydroxyoder Carbonsäuregruppe substituierten Hexyl-, 4-Methylpentyl, Octyl-, Cyclopentyl- oder Cyclohexylrest darstellen.

Als Metalle M des erfindungsgemäßen Verfahrens eignen sich die Metalle der Gruppen VIIIB, IB und IIB des Periodensystems der Elemente, also neben Eisen, Cobalt und Nickel vornehmlich die Platinmetalle wie Ruthenium, Rhodium, Osmium, Iridium und Platin sowie ganz besonders bevorzugt Palladium. Die Metalle können in den Komplexen gemäß Formel (I) formal ungeladen, formal einfach positiv geladen oder vorzugsweise formal zweifach positiv geladen vorliegen.

Geeignete formal geladene anionische Liganden $L^1$, $L^2$ sind Hydrid, Halogenide, Sulfate, Phosphate oder Nitrate. Des weiteren sind geeignet Carboxylate oder Salze organischer Sulfonsäuren wie Methylsulfonat, Trifluormethylsulfonat oder p-Toluolsulfonat. Unter den Salzen organischer Sulfonsäuren ist p-Toluolsulfonat bevorzugt. Als formal geladene Liganden $L^1$, $L^2$ sind Carboxylate, bevorzugt $C_1$- bis $C_{20}$-Carboxylate und insbesondere $C_1$- bis $C_7$-Carboxylate, also z.B. Acetat, Trifluoracetat, Propionat, Oxalat, Citrat oder Benzoat bevorzugt. Besonders bevorzugt ist Acetat.

Geeignete formal geladene organische Liganden $L^1$, $L^2$ sind auch $C_1$bis $C_{20}$-aliphatische Reste, $C_3$- bis $C_{14}$-cycloaliphatische Reste, $C_7$- bis $C_{20}$-Arylalkylreste mit $C_6$- bis $C_{14}$-Arylresten und $C_1$- bis $C_6$-Alkylresten sowie $C_6$- bis $C_{14}$-aromatische Reste, beispielsweise Methyl, Ethyl, Propyl, i-Propyl, t-Butyl, n-, i-Pentyl, Cyclohexyl, Benzyl, Phenyl und aliphatisch oder aromatisch substituierte Phenylreste.

Als formal ungeladene Liganden $L^1$, $L^2$ sind generell Lewisbasen geeignet, also Verbindungen mit mindestens einem freien Elektronenpaar. Besonders gut geeignet sind Lewisbasen deren freies Elektronenpaar oder deren freie Elektronenpaare sich an einem Stickstoff- oder Sauerstoffatom befinden, also beispielsweise Nitrile, R-CN, Ketone, Ether, Alkohole oder Wasser. Vorzugsweise verwendet man $C_1$- bis $C_{10}$-Nitrile wie Acetonitril, Propionitril, Benzonitril oder $C_2$- bis $C_{10}$-Ketone wie Aceton, Acetylaceton oder aber $C_2$- bis $C_{10}$-Ether, wie Dimethylether, Diethylether, Tetrahydrofuran. Insbesondere verwendet man Acetonitril, Tetrahydrofuran oder Wasser.

Grundsätzlich können die Liganden $L^1$ und $L^2$ in jeder beliebigen Ligandkombination vorliegen, d.h. der Metallkomplex (I) kann zum Beispiel einen Nitrat- und einen Acetatrest, einen p-Toluolsulfonat- und einen Acetatrest oder einen Nitrat- und einen formal geladenen organischen Liganden wie Methyl enthalten. Bevorzugt liegen in den Metallkomplexen $L^1$ und $L^2$ als identische Liganden vor.

Je nach formaler Ladung des das Metall M enthaltenden Komplexfragments enthalten die Metallkomplexe Anionen X. Ist das M-enthaltende Komplexfragment formal ungeladen, so enthält der erfindungsgemäße Komplex gemäß Formel (I) kein Anion X. Vorteilhafterweise werden Anionen X eingesetzt, die möglichst wenig nucleophil sind, d.h. eine möglichst geringe Tendenz haben, mit dem Zentralmetall M eine starke Wechselwirkung, ob ionisch, koordinativ oder kovalent, einzugehen.

Geeignete Anionen X sind beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat. Vorzugsweise verwendet man Perchlorat, Trifluoracetat, Sulfonate wie Methylsulfonat, Trifluormethylsulfonat, p-Toluolsulfonat, Tetrafluoroborat oder Hexafluorophosphat und insbesondere Trifluormethylsulfonat, Trifluoracetat, Perchlorat oder p-Toluolsulfonat.

Als definierte Metallkomplexe sind zum Beispiel folgende Palladium-(II)-acetat-komplexe geeignet:

[1,3-Bis(di-(hydroxyphenyl)phosphino)propan]-,
[1,3-Bis(di-(4-hydroxybutyl)phosphino)propan]-,
[1,3-Bis(di-(4-methylol-5-hydroxypentyl)phosphino)propan]-,
[1,3-Bis(di-(5-hydroxypentyl)phosphino)propan]-,
[1,3-Bis(di-(6-hydroxyhexyl)phosphino)propan]-,
[1,3-Bis(di((3-hydroxycyclopentyl)propyl)phosphino)propan]-,
[1,3-Bis(di-(8-hydroxyoctyl)phosphino)propan]-,
[1,3-Bis(di-(3-hydroxycyclohexyl)propyl)phosphino)propan]-,
[1,3-Bis(di-(sulfonatophenyl)phosphino)propan]-,
[1,3-Bis(di-(4-sulfonatobutyl)phosphino)propan]-,
[1,3-Bis(di-(4-methylol-5-sulfonatopentyl)phosphino)propan]-,

[1,3-Bis(di-(5-sulfonatopentyl)phosphino)propan]-,
[2,3-Bis(di-(6-sulfonatohexyl)phosphino)propan]-,
[1,3-Bis(di((3-sulfonatocyclopentyl)propyl)phosphino)propan]-,
[1,3-Bis(di-(8-sulfonatooctyl)phosphino)propan]-,
[1,3-Bis(di-((3-sulfonatocyclohexyl)propyl)phosphino)propan]-,
[1,3-Bis(di-(carboxyphenyl)phosphino)propan]-,
[1,3-Bis(di-(4-carboxybutyl)phosphino)propan]-,
[1,3-Bis(di-(4-methylol-5-carboxypentyl)phosphino)propan]-,
[2,3-Bis(di-(5-carboxypentyl)phosphino)propan]-,
[1,3-Bis(di-(6-carboxyhexyl)phosphino)propan]-,
[1,3-Bis(di((3-carboxycyclopentyl)propyl)phosphino)propan]-,
[1,3-Bis(di-(8-carboxyoctyl)phosphino)propan]-, oder
[1,3-Bis(di-(3-carboxycyclohexyl)propyl)phosphino)propan]-palladium-(II)-acetat.

Die beschriebenen Übergangsmetallkomplexe sind zumindest in geringen Teilen in Wasser löslich. In der Regel sind diese Metallkomplexe gut bis sehr gut in Wasser löslich.

Definierte Metallkomplexe gemäß Formel (I) können nach folgenden Verfahren hergestellt werden.

Die Herstellung erfolgt für die neutralen Chelatkomplexe (p = 0) durch Austausch von schwach koordinierenden Liganden, wie zum Beispiel 1,5-Cyclooctadien, Benzonitril oder Tetramethylethylendiamin, die an die entsprechenden Übergangsmetallverbindungen, beispielsweise Übergangsmetall-Halogenide, Übergangsmetall-(Alkyl)(Halogenide), Übergangsmetall-Diorganyle, gebunden sind, gegen die Chelatliganden der allgemeinen Formel (VIII) in der vorhergehend beschriebenen Bedeutung.

Die Reaktion wird im allgemeinen in einem polaren Lösungsmittel, wie beispielsweise Acetonitril, Aceton, Ethanol, Diethylether, Dichlormethan oder Tetrahydrofuran oder deren Gemischen bei Temperaturen im Bereich von -78 bis 90 °C durchgeführt.

Desweiteren können neutrale Metallkomplexe gemäß Formel (I), in denen $L^1$ und $L^2$ Carboxylat, z.B. Acetat, bedeuten, durch Umsetzung von Übergangsmetallsalzen wie beispielsweise Palladium-(II)-acetat mit den beschriebenen Chelatliganden (VIII) in Acetonitril, Aceton, Ethanol, Diethylether, Dichlormethan, Tetrahydrofuran oder Wasser bei Raumtemperatur hergestellt werden. Auch Lösungsmittelgemische können dabei verwendet werden.

Als weitere Synthesemethode kommt die Umsetzung der Metallkomplexe der allgemeinen Formel (I) mit Organometallverbindungen der Gruppen IA, IIA, IVA und IIB in Frage, beispielsweise $C_1$- bis $C_6$-Alkyle der Metalle Lithium, Aluminium, Magnesium, Zinn, Zink, wobei formal geladene anorganische Liganden $L^1$, $L^2$, wie vorher definiert, gegen formal geladene aliphatische, cycloaliphatische oder aromatische Liganden $L^1$, $L^2$, wie ebenfalls vorher definiert, ausgetauscht werden. Die Reaktion wird im allgemeinen in einem Lösungsmittel wie beispielsweise Diethylether oder Tetrahydrofuran bei Temperaturen im Bereich von -78 bis 65 °C durchgeführt.

Monokationische Komplexe der allgemeinen Formel (I) (p=1) können zum Beispiel durch Umsetzung von (Chelatligand) Metall (Acetat) (Organo) oder (Chelatligand) Metall (Halogeno) (Organo)-Komplexen mit stöchiometrischen Mengen eines Metallsalzes M'X erhalten werden. Die Umsetzungen werden im allgemeinen in koordinierenden Lösungsmitteln wie beispielsweise Acetonitril, Benzonitril, Tetrahydrofuran oder Ether bei Temperaturen im Bereich von -78 bis 65 °C durchgeführt.

Es ist vorteilhaft, wenn die Metallsalze M'X folgende Kriterien erfüllen. Das Metall M' soll vorzugsweise schwer lösliche Metallchloride bilden, wie zum Beispiel Silberchlorid. Das Salz-Anion soll vorzugsweise ein nicht-nucleophiles Anion X, wie vorher definiert, sein.

Gut geeignete Salze für die Bildung von kationischen Komplexen sind z.B. Silbertetrafluoroborat, Silberhexafluorophosphat, Silbertrifluormethansulfonat, Silberperchlorat, Silberparatoluolsulfonat, Silbertrifluoracetat und Silberhexafluorantimonat, Natriumtetraphenylborat, Natriumtetrakis(pentafluorophenyl)borat, Silbertrifluoracetat oder auch Natriumtetrakis(3,5-bis(trifluormethyl)phenyl)borat.

Die dikationischen Komplexe (p = 2) werden analog den monokationischen Komplexen hergestellt, nur dass anstatt der (Chelatligand) Metall (Acetat) (Organo)- oder der (Chelatligand)Metall(Halogeno) (Organo)-Komplexe die (Chelatligand)Metall(diacetat)-bzw. (Chelatligand)Metall(di-Halogeno)-Komplexe als Vorstufe sowie zwei Äquivalente des Metallsalzes eingesetzt werden.

Als weiteres Verfahren zur Herstellung der dikationischen Komplexe gemäß Formel (I) kommt die Umsetzung von $[U_4M]X_2$ mit den eingangs definierten Chelatliganden der allgemeinen Formel (VIII) in Frage. Hierbei bedeutet U gleiche oder unterschiedliche schwache Liganden wie beispielsweise Acetonitril, Benzonitril oder 1,5-Cyclooctadien, M und X haben die vorher definierte Bedeutung.

Ein bevorzugtes Verfahren zur Herstellung der Metallkomplexe der allgemeinen Formel (I) ist die Umsetzung der Dihalogenmetallvorläuferkomplexe mit Silbersalzen enthaltend nicht-koordinierende Anionen.

Die nach dem erfindungsgemäßen Verfahren eingesetzten Dispergiermittel b) können Emulgatoren oder

Schutzkolloide sein.

Geeignete Schutzkolloide sind beispielsweise Polyvinylalkohole, Polyalkylenglykole, Alkalimetallsalze von Polyacrylsäuren und Polymethacrylsäuren, Cellulose- und Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, S. 192 bis 208.

Gebräuchliche nichtionische Emulgatoren sind z.B. ethoxilierte Mono-, Di- und Tri-Alkylphenole (EO-Grad: 3 bis 50, Alkylrest: $C_4$ bis $C_{12}$) sowie ethoxilierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxilate, EO-Grad: 3 bis 8), Lutensol® AO-Marken ($C_{13}C_{15}$-Oxoalkoholethoxilate, EO-Grad: 3 bis 30), Lutensol® AT-Marken ($C_{16}C_{18}$-Fettalkoholethoxilate, EO-Grad: 11 bis 80), Lutensol® ON-Marken ($C_{10}$-Oxoalkoholethoxilate, EO-Grad: 3 bis 11) und die Lutensol® TO-Marken ($C_{13}$-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (XI)

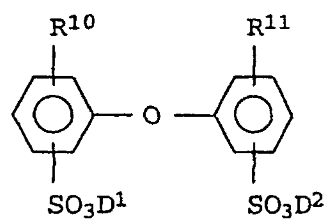

(XI),

worin $R^{10}$ und $R^{11}$ H-Atome oder $C_4$- bis $C_{24}$-Alkyl bedeuten und nicht gleichzeitig H-Atome sind, und $D^1$ und $D^2$ Alkalimetallionen und/oder Ammoniumionen sein können, erwiesen. In der allgemeinen Formel (XI) bedeuten $R^{10}$ und $R^{11}$ bevorzugt lineare oder verzweigte Alkylreste mit 6 bis 18 C-Atomen, insbesondere mit 6, 12 und 16 C-Atomen oder Wasserstoff, wobei $R^{10}$ und $R^{11}$ nicht beide gleichzeitig H-Atome sind. $D^1$ und $D^2$ sind bevorzugt Natrium, Kalium oder Ammonium, wobei Natrium besonders bevorzugt ist. Besonders vorteilhaft sind Verbindungen (XI), in denen $D^1$ und $D^2$ Natrium, $R^{10}$ ein verzweigter Alkylrest mit 12 C-Atomen und $R^{11}$ ein H-Atom oder $R^{10}$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (XI) sind allgemein bekannt, z. B. aus US-A 4 269 749, und im Handel erhältlich.

Geeignete kationenaktive Emulgatoren sind in der Regel einen $C_6$bis $C_{18}$-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der

Firma BASF AG, ca. 12 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Wesentlich ist, dass die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis (pentafluorophenyl)borat, Tetrakis[bis(3,5-trifluormethyl)phenyl]borat, Hexafluorophosphat, Hexafluoroarsenat oder Hexafluoroantimonat.

Geeignete Hydroxyverbindungen c) sind alle Stoffe, die eine oder mehrere Hydroxylgruppen besitzen. Bevorzugt sind niedere Alkohole mit 1 bis 6 C-Atomen wie Methanol, Ethanol, n-oder i-Propanol, n-Butanol, s-Butanol oder t-Butanol. Außerdem können aromatische Hydroxyverbindungen, wie z.B. Phenol, eingesetzt werden. Ebenfalls geeignet sind z.B. Zucker, wie Fructose, Glucose oder Lactose. Weiterhin geeignet sind Polyalkohole, wie Ethylenglykol, Glyzerin oder auch Polyvinylalkohol. Selbstverständlich können auch Mischungen mehrerer Hydroxyverbindungen eingesetzt werden.

Die erfindungsgemäße Copolymerisation von Kohlenmonoxid und wenigstens einer olefinisch ungesättigten Verbindung in Gegenwart der Metallkomplexe oder ihrer Einzelkomponenten und des Dispergiermittels b) erfolgt in wässrigem Medium. Das Copolymerisationsgemisch wird zur Erlangung reproduzierbar guter Produktivitäten vorzugsweise kräftig durchgemischt.

Die Kohlenmonoxidcopolymerisate können prinzipiell nach zwei unterschiedlichen Verfahrensweisen gewonnen werden. Nach dem einen Herstellungsverfahren kommen die vorgenannten definierten Metallkomplexe a1) zum Einsatz. Diese Komplexe werden separat hergestellt und als solche zum Reaktionsgemisch gegeben bzw. im Reaktionsbehältnis vorgelegt. In einem weiteren Herstellungsverfahren werden die die katalytisch aktive Spezies bildenden Bestandteile einzeln zum Reaktionsgemisch gegeben. Bei dieser in-situ Generierung des Katalysators wird im allgemeinen das Metall M in Salzform oder als Komplexsalz dem Reaktionsgefäß zugeführt. Des weiteren wird die Chelatligandverbindung a1.2) zusgesetzt. Gegebenenfalls kann bei beiden Verfahrensweisen als Aktivatorverbindung eine Säure a2) und/oder eine Hydroxyverbindung c) zugesetzt werden. Die Zugabe der Aktivatorspezies kann entfallen, wenn der Chelatligand a1.2) über Reste $R^1$ bis $R^4$ verfügt, die mindestens eine freie Sulfon- oder Carbonsäuregruppe aufweisen.

Häufig gehen mit der Verwendung definierter Metallkomplexe a1) höhere Produktivitäten als mit dem in-situ-Verfahren einher.

Als wenigstens eine olefinisch ungesättigte Verbindung werden erfindungsgemäß solche Verbindungen verwendet, welche das Strukturelement der allgemeinen Formel (III)

$$-CH{=}CH\text{-}Q\text{-}Pol_{\pi} \qquad (III),$$

enthalten. Ebenfalls einsetzbar ist ein Gemisch aus einer das Strukturelement der allgemeinen Formel (III) enthaltenden Verbindung und einer olefinisch ungesättigten Verbindung mit 2 bis 20 Kohlenstoffatomen. Selbstverständlich können erfindungsgemäß auch Gemische von das Strukturmerkmal der allgemeinen Formel (III) enthaltenden Verbindungen und Gemische von olefinisch ungesättigten Verbindungen mit 2 bis 20 Kohlenstoffatomen eingesetzt werden.

Dabei ist Q eine unpolare organische Gruppe ausgewählt aus der Gruppe umfassend lineares oder verzweigtes $C_1$- bis $C_{20}$-Alkyl, oft $C_2$- bis $C_{18}$-Alkyl und häufig $C_3$- bis $C_{14}$-Alkyl, beispielsweise Methyl, Ethyl, n- oder i-Propyl, n-, i- oder t-Butyl, -Pentyl, -Hexyl, -Heptyl, -Octyl, -Nonyl, -Decyl, -Undecyl, -Dodecyl, -Tridecyl oder -Tetradecyl, $C_3$- bis $C_{14}$-Cycloalkyl, beispielsweise Cyclopropyl, Cyclobutyl, Cyclopentyl oder Cyclohexyl, $C_6$- bis $C_{14}$-Aryl, beispielsweise Phenyl, Naphthyl oder Phenanthryl sowie Alkylaryl mit 1 bis 20 C-Atomen im Alkylteil und 6 bis 14 C-Atomen im Arylteil, beispielsweise Benzyl.

An die unpolare Gruppe Q sind $\pi$ polare Gruppen Pol gebunden. Dabei ist $\pi$ eine ganze Zahl ungleich 0. Bevorzugt ist $\pi$ 1, 2, 3 oder 4. Selbstverständlich kann $\pi$ auch ein höherer Zahlenwert sein.

Pol ist ein polarer Rest, welcher ausgewählt ist aus der Gruppe umfassend Carboxyl ($-CO_2H$), Sulfonyl ($-SO_3H$), Sulfat ($-OSO_3H$), Phosphonyl ($-PO_3H$), Phosphat ($-OPO_3H_2$) sowie deren Alkalimetallsalze, insbesondere Natrium- oder Kaliumsalze, Erdalkalimetallsalze, beispielsweise Magnesium- oder Calziumsalze und/oder Ammoniumsalze.

Von Pol ebenfalls umfaßt sind durch Protonierung oder Alkylierung zugängliche Alkanolammonium-, Pyridinium-, Imidazolinium-, Oxazolinium-, Morpholinium-, Thiazolinium-, Chinolinium-, Isochinolinium-, Tropylium-, Sulfonium-, Guanidinium- und Phosphoniumverbindungen sowie insbesondere Ammoniumverbindungen der allgemeinen Formel (IV)

$$-N^{\oplus}R^6R^7R^8 \quad \text{(IV).}$$

Hierbei steht $R^6$, $R^7$ und $R^8$ unabhängig voneinander für Wasserstoff und lineares oder verzweigtes $C_1$- bis $C_{20}$-Alkyl, häufig $C_1$- bis $C_{10}$-Alkyl und oft $C_1$- bis $C_5$-Alkyl, wobei Alkyl beispielsweise Methyl, Ethyl, n- oder i-Propyl, n-, i- oder t-Butyl, -Pentyl, -Hexyl, -Heptyl, -Octyl, -Nonyl, -Decyl, -Undecyl, -Dodecyl, -Tridecyl oder -Tetradecyl ist. Die korrespondierenden Anionen der vorgenannten Verbindungen sind nicht-nucleophile Anionen, wie beispielsweise Perchlorat, Sulfat, Phosphat, Nitrat und Carboxylate, wie Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Der polare Rest Pol kann aber auch eine Gruppe der allgemeinen Formel (V), (VI) oder (VII)

$$-(EO)_k-(PO)_l-R^9 \quad \text{(V),}$$

$$-(PO)_l-(EO)_k-R^9 \quad \text{(VI),}$$

$$-(EO_k/PO_l)-R^9 \quad \text{(VII)}$$

sein, wobei

EO für eine $-CH_2-CH_2-O$-Gruppe,

PO für eine $-CH_2-CH(CH_3)-O$- oder eine $-CH(CH_3)-CH_2-O$-Gruppe steht und k und l für Zahlenwerte von 0 bis 50, häufig von 0 bis 30 und oft von 0 bis 15 stehen, wobei aber k und l nicht gleichzeitig 0 sind.

Weiterhin sollen in

Formel (V) und (VI) : $(EO)_k$ ein Block aus k $-CH_2-CH_2-O$-Gruppen, und $(PO)_l$ ein Block aus l $-CH_2-CH(CH_3)-O$- oder $-CH(CH_3)-CH_2-O$-Gruppen, und

Formel (VII) : $(EO_k/PO_l)$ ein Gemisch aus k $-CH_2-CH_2-O$-Gruppen und l $-CH_2-CH(CH_3)-O$- oder $-CH(CH_3)-CH_2-O$-Gruppen in statistischer Verteilung

bedeuten.

$R^9$ steht für Wasserstoff, lineares oder verzweigtes $C_1$- bis $C_{20}$-Alkyl, oft $C_1$- bis $C_{10}$-Alkyl und häufig $C_1$- bis $C_6$-Alkyl oder $-SO_3H$ sowie dessen entsprechendes Alkalimetall-, Erdalkalimetallund/oder Ammoniumsalz. Hierbei steht Alkyl beispielsweise für Methyl, Ethyl, n- oder i-Propyl, n-, i- oder t-Butyl, -Pentyl, -Hexyl, -Heptyl, -Octyl, -Nonyl, -Decyl, -Undecyl, -Dodecyl, -Tridecyl oder -Tetradecyl, Alkalimetall beispielsweise für Natrium oder Kalium und Erdalkalimetall beispielsweise für Calzium oder Magnesium.

Als wenigstens eine das Strukturelement der allgemeinen Formel (III) enthaltende Verbindung werden erfindungsgemäß insbesondere $\alpha$-Olefine der allgemeinen Formel (X)

$$H_2C{=}CH-Q-Pol_{\pi} \quad \text{(X),}$$

verwendet, worin Q, Pol und $\pi$ die voran angegebene Bedeutungen haben.

Bevorzugte Olefine (X) sind 10-Undecensäure, 3-Butensäure, 4-Pentensäure, 5-Hexensäure sowie Styrol-4-sulfonsäure.

Neben der wenigstens einen das Strukturelement der allgemeinen Formel (III) enthaltenden Verbindung kann wenigstens eine weitere olefinisch ungesättigte Monomerverbindung zur Polymerisation eingesetzt werden. Als wenigstens eine weitere olefinisch ungesättigte Monomerverbindung kommen bei den erfindungsgemäßen Verfahren zur Herstellung wässriger Copolymerisatdispersionen sowohl reine Kohlenwasserstoffverbindungen als auch heteroatomhaltige $\alpha$-Olefine, wie (Meth)acrylsäureester oder -amide sowie Homoallyloder Allylalkohole, -ether oder -halogenide

in Betracht. Unter den reinen Kohlenwasserstoffen sind $C_2$- bis $C_{20}$-1-Alkene geeignet. Unter diesen sind die niedermolekularen Olefine, z.B. Ethen oder α-Olefine mit 3 bis 8 C-Atomen, wie Propen, 1-Buten, 1-Penten, 1-Hexen oder 1-Octen hervorzuheben. Selbstverständlich können auch cyclische Olefine, z.B. Cyclopenten, Norbornen, aromatische Olefinverbindungen, wie Styrol oder α-Methylstyrol oder Vinylester, wie Vinylacetat eingesetzt werden. Für den Fall von mindestens zwei voneinander verschiedenen eingesetzten Olefinen sind insbesondere $C_2$- bis $C_{20}$-1-Alkene geeignet. Unter diesen sind die niedermolekularen Olefine, z.B. Ethen oder α-Olefine mit 3 bis 8 C-Atomen, wie Propen, 1-Buten, 1-Penten, 1-Hexen oder 1-Octen hervorzuheben.

Als bevorzugte weitere olefinisch ungesättigte Monomerverbindung mit 2 bis 20 C-Atomen sind Ethen, Propen, 1-Buten, 1-Hexen, 1-Octen sowie 1-Decen, 1-Dodecen, 1-Tetradecen, 1-Hexadecen und 1-Octadecen zu nennen.

Der Mengenanteil der wenigstens einen das Strukturelement der allgemeinen Formel (III) enthaltenden olefinisch ungesättigten Verbindung im zu polymerisierenden Monomerengemisch, bestehend aus der wenigstens einen das Strukturelement der allgemeinen Formel (III) enthaltenden olefinisch ungesättigten Verbindung und gegebenenfalls der wenigstens einen weiteren olefinisch ungesättigten Monomerverbindung mit 2 bis 20 C-Atomen beträgt 0,1 bis 100 Gew.-%, häufig 0,5 bis 80 Gew.-% und oft 1,0 bis 60 Gew.-% oder 2,0 bis 40 Gew.-%.

Erfindungsgemäß ist es möglich, die Gesamtmenge der wenigstens einen olefinisch ungesättigten Verbindung im Polymerisationsreaktor vorzulegen. Es ist aber auch möglich, gegebenenfalls lediglich eine Teilmenge der wenigstens einen olefinisch ungesättigten Verbindung im Polymerisationsreaktor vorzulegen und die Gesamtmenge bzw. die verbleibende Restmenge während der Polymerisation kontinuierlich oder diskontinuierlich zuzugeben. Sollen Gemische aus wenigstens einer das Strukturelement der allgemeinen Formel (III) enthaltenden Verbindung und wenigstens einer olefinisch ungesättigten Verbindung mit 2 bis 20 Kohlenstoffatomen zur Polymerisation eingesetzt werden, kann eine Teil- oder die Gesamtmenge der zu polymerisierenden Verbindungen im Polymerisationsreaktor vorgelegt und die gegebenenfalls verbleibende Restmengen während der Polymerisation kontinuierlich oder diskontinuierlich zugegeben werden. Selbstverständlich ist es auch möglich, die unterschiedlichen olefinisch ungesättigten Verbindungen in einer sogenannten Gradientenfahrweise zuzugeben. Hierunter versteht man, wenn sich das Mengenverhältnis der olefinisch ungesättigten Verbindungen zueinander während der Olefindosierung verändert.

Wesentlich ist, dass das erfindungsgemäße Verfahren sowohl diskontinuierlich, z.B. in Rührautoklaven, als auch kontinuierlich, z.B. in Rohrreaktoren, Schlaufenreaktoren oder Rührkesselkaskaden durchgeführt werden kann.

Die erfindungsgemäß zugänglichen wässrigen Copolymerisatdispersionen sind über mehrere Wochen oder Monate stabil und zeigen während dieser Zeit in der Regel praktisch keinerlei Phasenseparierung, Abscheidungen oder Koagulatbildung.

Das molare Verhältnis von Kohlenmonoxid zur wenigstens einen olefinisch ungesättigten Verbindung bewegt sich in der Regel im Bereich von 10:1 bis 1:10, üblicherweise werden Werte im Bereich von 5:1 bis 1:5 oder von 2:1 bis 1:2 benutzt.

Die Copolymerisationstemperatur wird im allgemeinen in einem Bereich von 0 bis 200 °C eingestellt, wobei bevorzugt bei Temperaturen im Bereich von 20 bis 130 °C copolymerisiert wird. Der Kohlenmonoxidpartialdruck liegt im allgemeinen im Bereich von 1 bis 300 bar und insbesondere im Bereich von 10 bis 220 bar. Von Vorteil ist, wenn der Partialdruck der wenigstens einen olefinisch ungesättigten Verbindung unter Reaktionsbedingungen kleiner als der Kohlenmonoxidpartialdruck. Insbesondere ist der Partialdruck der wenigstens einen olefinisch ungesättigten Verbindung unter Reaktionsbedingunen ≤ 50 %, ≤ 40 %, ≤ 30 % oder sogar ≤ 20 %, jeweils bezogen auf den Gesamtdruck. Der Polymerisationsreaktor wird üblicherweise vor dem Aufpressen mit Kohlenmonoxid durch Spülen mit Kohlenmonoxid oder Inertgas, beispielsweise Stickstoff oder Argon inertisiert. Häufig ist die Polymerisation jedoch auch ohne vorherige Inertisierung möglich.

Zur Katalysatoraktivierung kann auf geeignete Säuren a2) als Aktivatorverbindungen zurückgegriffen werden. Als Aktivatorverbindungen kommen sowohl mineralische Protonensäuren als auch Lewis-Säuren in Frage. Geeignet als Protonensäuren sind zum Beispiel Schwefelsäure, Salpetersäure, Borsäure, Tetrafluorborsäure, Perchlorsäure, p-Toluolsulfonsäure, Trifluoressigsäure, Trifluormethansulfonsäure oder Methansulfonsäure. Bevorzugt wird auf p-Toluolsulfonsäure und Tetrafluorborsäure zurückgegriffen.

Als Lewis-Säuren a2) kommen beispielsweise Borverbindungen wie Triphenylboran, Tris(pentafluorphenyl) boran, Tris(p-chlorphenyl)boran oder Tris(3,5-bis-(trifluormethyl)phenyl)boran oder Aluminium-, Zink-, Antimon- oder Titanverbindungen mit lewissaurem Charakter in Frage. Es können auch Mischungen von Protonensäuren bzw. Lewis-Säuren sowie Protonen- und Lewis-Säuren im Gemisch eingesetzt werden.

Das molare Verhältnis von Aktivator zu Metallkomplex a1), bezogen auf die Menge an Metall M, liegt im allgemeinen im Bereich 60:1 bis 1:1, bevorzugt von 25:1 bis 2:1 und besonders bevorzugt von 12:1 bis 3:1 für die Fälle, in denen die funktionellen Gruppen der Reste $R^1$ bis $R^4$ keine Sulfon- oder Carbonsäurefunktionalitäten sind. Selbstverständlich kann auch bei Metallkomplexen mit Chelatliganden, die die vorgenannten funktionellen Säuregruppen tragen, Aktivatorverbindung a2) zum Polymerisationsgemisch gegeben werden.

Der als Dispergiermittel b) eingesetzte Emulgator wird vorteilhaft in einer Menge von 0,005 bis 10 Gew.-%, vorzugsweise 0,01 bis 7 Gew.-%, insbesondere 0,1 bis 5 Gew.-%, bezogen auf die Gesamtmenge der Monomere,

eingesetzt.

Die Menge der als Dispergiermittel b) zusätzlich oder stattdessen eingesetzten Schutzkolloide beträgt oft 0,1 bis 10 Gew.-% und häufig 0,2 bis 7 Gew.-%, bezogen auf die Gesamtmonomerenmenge.

Das molare Verhältnis von Hydroxyverbindung c) zu Metallkomplex a1), bezogen auf die Menge an Metall M, liegt im allgemeinen im Bereich von 0 bis 100000, oft von 500 bis 50000 und häufig von 1000 bis 10000.

Im erfindungsgemäßen Polymerisationsverfahren werden mittlere Katalysatoraktivitäten erhalten, die im allgemeinen ≥ 0,17 kg, häufig ≥ 0,25 kg und oft ≥ 0,5 kg Copolymerisat pro Gramm Komplexmetall und Stunde sind.

Erfindungsgemäß werden Copolymerisate erhalten, deren über quasielastische Lichtstreuung (ISO-Norm 13321) ermittelte zahlenmittlere Teilchendurchmesser im Bereich von 1 bis 2000 nm, häufig 10 bis 1500 nm und oft von 15 bis 1000 liegt.

Die mittels Gelpermeationschromatographie mit Polymethylmethacrylat als Standard bestimmten gewichtsmittleren Molekulargewichte der erfindungsgemäß zugänglichen Copolymerisate liegen in der Regel im Bereich von 1000 bis 1000000, häufig im Bereich von 1500 bis 800000 und oft im Bereich von 2000 bis 600000.

Bei den nach den erfindungsgemäßen Verfahren zugänglichen Copolymerisaten handelt es sich, wie $^{13}C$- bzw. $^{1}H$-NMR-spektroskopische Untersuchungen belegen, in der Regel um lineare, alternierende Kohlenmonoxidcopolymerisatverbindungen. Hierunter sind Polymerisatverbindungen zu verstehen, bei welchen in der Polymerkette auf jede Kohlenmonoxideinheit eine aus der olefinischen Doppelbindung der wenigstens einen olefinisch ungesättigten Verbindung herrührende $-CH_2-CH-$ oder -CH-CH-Einheit und auf jede $-CH_2-CH-$ oder -CH-CH-Einheit eine Kohlenmonoxideinheit folgt. Insbesondere ist das Verhältnis von Kohlenmonoxideinheiten zu $-CH_2-CH-$ oder -CH-CH-Einheiten in der Regel von 0,9 zu 1 bis 1 zu 0,9, häufig von 0,95 zu 1 bis 1 zu 0,95 und oft von 0,98 zu 1 bis 1 zu 0,98.

Durch gezielte Variation der olefinisch ungesättigten Verbindungen ist es erfindungsgemäß möglich, Copolymerisate herzustellen, deren Glasübergangstemperatur bzw. Schmelzpunkt im Bereich von -60 bis 270 °C liegt.

Mit der Glasübergangstemperatur $T_g$, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53765).

Nach Fox (T.G. Fox, Bull. Am. Phys. Soc. 1956 [Ser. II] 1, S. 123 und gemäß Ullmann's Encyclopädie der technischen Chemie, Bd. 19, S. 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^{\,1} + x^2/T_g^{\,2} + .... x^n/T_g^{\,n},$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, S. 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die erfindungsgemäßen Copolymerisatdispersionen weisen in der Regel Mindestfilmbildetemperaturen MFT ≤ 80 °C bevorzugt ≤ 50 °C und besonders bevorzugt ≤ 30 °C auf. Da die MFT unterhalb 0 °C nicht mehr meßbar ist, kann die untere Grenze der MFT nur durch die $T_g$-Werte angegeben werden. Die Bestimmung der MFT erfolgt nach DIN 53787.

Durch das erfindungsgemäße Verfahren sind wässrige Copolymerisatdispersionen zugänglich, deren Feststoffanteil, bezogen auf die wässrige Copolymerisatdispersion, 0,1 bis 70 Gew.-%, häufig 1 bis 65 Gew.-% und oft 5 bis 60 Gew.-% und alle Werte dazwischen beträgt.

Selbstverständlich können die nach Abschluß der Hauptpolymerisationsreaktion in der wässrigen Copolymerisatdispersion verbliebenen Restmonomeren durch Dampf- und/oder Inertgasstrippung entfernt werden, ohne dass sich die Polymereigenschaften der wässrigen Copolymerisatdispersion nachteilig verändern.

Die katalytische Metallkomplexverbindung kann aus der erfindungsgemäß erhältlichen wässrigen Copolymerisatdispersion bei Bedarf ebenfalls entfernt werden. Beispielsweise kann man dazu das disperse Copolymerisat durch Zentrifugieren vom wässrigen Serum trennen, durch Zusatz von neutralem, saurem und/oder basischem Wasser redispergieren, wieder zentrifugieren etc., wobei sich der wasserlöslche Metallkomplex jeweils im Serum anreichert. Darüber hinaus ist es oft auch möglich, die Metallkomplexverbindung über Dialyseverfahren zu entfernen.

Wässrige Copolymerisatdispersionen, welche nach dem beschriebenen erfingungsgemäßen Verfahren hergestellt werden, sind über mehrere Wochen oder Monate stabil und zeigen während dieser Zeit in der Regel praktisch keinerlei Phasenseparierung, Abscheidungen oder Koagulatbildung. Sie eignen sich vorzüglich insbesondere als Bindemittel bei der Herstellung von Klebstoffen, wie beispielsweise Haftklebstoffen, Bauklebstoffen oder Industrieklebstoffen, Dichtmassen, Kunststoffputzen und Anstrichmitteln, wie beispielsweise für die Papierstreicherei, Dispersionsfarben oder für Druckfarben und Drucklacke zum Bedrucken von Kunststofffolien sowie zur Herstellung von Vliesstoffen oder zur Herstellung von Schutzschichten und Wasserdampfsperren, wie beispielsweise bei der Grundierung.

Auch sei festgehalten, dass die erfindungsgemäß erhältlichen wässrigen Copolymerisatdispersionen in einfacher Weise zu redispergierbaren Copolymerisatpulvern trockenbar sind (z.B. Gefriertrocknung oder Sprühtrocknung). Dies gilt insbesondere dann, wenn die Glasübergangstemperatur der Copolymerisate ≥ 50 °C, vorzugsweise ≥ 60 °C, besonders bevorzugt ≥ 70 °C, ganz besonders bevorzugt ≥ 80 °C und insbesondere bevorzugt ≥ 90 °C bzw. ≥ 100 °C beträgt. Die Copolymerisatpulver eignen sich ebenfalls als Bindemittel in Klebstoffen, Dichtmassen, Kunststoffputzen und Anstrichmitteln, sowie zur Herstellung von Vliesstoffen oder zur Modifizierung von mineralischen Bindemitteln, wie beispielsweise Mörtel oder Zement, oder als modifizierende Additive in anderen Kunststoffen.

Mit Hilfe der erfindungsgemäßen Verfahren wird der Einsatz organischer Lösungsmittel oder gar halogenierter oder aromatischer Kohlenwasserstoffe vermieden. Außerdem entfallen aufwendige Trennoperationen. Das erfindungsgemäße Verfahren eröffnet demzufolge einen ökonomischen, ökologischen, präparativ einfachen und sicherheitstechnisch weitgehend unbedenklichen Zugang zu linearen, alternierenden Kohlenmonoxidcopolymerisaten. Das erfindungsgemäße Verfahren ist im Hinblick auf erreichbare Katalysatoraktivitäten, Molekulargewichte und deren Verteilung sowie, bei Anwesenheit mehrerer verschiedener Olefine, bezüglich der erreichbaren Einbauraten höherer Olefine besonders effektiv.

Die vorliegende Erfindung wird anhand der nachfolgenden Beispiele näher erläutert.

Beispiele

1 Darstellung des Metallkomplexes

1.1 Herstellung von 1,3-Bis(di-ethylphosphonit)propan

Zu 204 g 1,3-Dibrompropan (99 Gew.-%; Fa. Aldrich) gab man bei 20 bis 25 °C (Raumtemperatur) 674 g Triethylphosphit (98 Gew.-%; Fa. Aldrich) und erwärmte die Mischung unter Rühren langsam auf 140 °C. Das sich bildende Bromethan wurde destillativ entfernt. Nach Abschwächung der Bromethanfreisetzung wurde die Reaktionstemperatur auf 155 °C erhöht und die Reaktionsmischung unter Rühren für 24 Stunden bei dieser Temperatur gehalten. Anschließend wurden weitere 674 g Triethylphosphit zugetropft und die Reaktion nach weiteren 24 Stunden durch destillative Abtrennung überschüssigen Triethylphosphits abgebrochen. Monosubstituiertes Produkt wurde destillativ bei 150 °C im Hochvakuum [0,1 mbar (absolut)] entfernt. Der verbleibende Destillationsrückstand stellte 1,3-Bis(di-ethylphosphonit)propan dar. Die Ausbeute betrug 271 g, entsprechend 86 Gew.-%, bezogen auf 1,3-Dibromethan.

1.2 Herstellung von 1,3-Diphosphinopropan

Eine Lösung, bestehend aus 103,3 g 1,3-Bis(di-ethylphosphonit)propan in 100 ml wasserfreiem mit Argon gesättigtem Diethylether, wurde unter Rühren innerhalb von 180 Minuten bei 0 °C zu einer Suspension aus 25 g $LiAlH_4$ (95 Gew.-%, Fa. Aldrich) in 200 ml wasserfreiem Diethylether gegeben. Anschließend wurde die Reaktionstemperatur auf Raumtemperatur erhöht und die Reaktionsmischung 16 Stunden bei dieser Temperatur gerührt. Danach gab man zur Hydrolyse von überschüssigem $LiAlH_4$ langsam 200 ml entgaste und mit Argon gesättigte 6 molare wässrige Salzsäure zu. Die organische Phase wurde danach abgetrennt und 24 Stunden über Natriumsulfat getrocknet. Die wässrige Phase wurde mit 200 ml Diethylether durchmischt und die Diethyletherphase nach Phasentrennung ebenfalls 24 Stunden über Natriumsulfat getrocknet. Anschließend wurden beide Diethyletherphasen vereinigt. Nach destillativer Abtrennung des Diethylethers bei 60 °C/l bar (absolut), wurde 1,3-Diphosphinopropan destillativ bei 140 °C/1 bar (absolut) erhalten. Die Ausbeute betrug 20 g, entsprechend 61 Gew.-%, bezogen auf 1,3-Bis(di-ethylphosphonit)propan.

1.3 Herstellung von 1,3-Bis(di-5-hydroxypentyl)phophinopropan

1,08 g 1,3-Diphosphinopropan und 4,47 g 5-Penten-1-ol (dessen Herstellung erfolgte analog Organikum, 18. Auflage, Deutscher Verlag der Wissenschaften, 1990, durch Alkylierung von Malonsäurediethylester mit Allylbromid [S. 518] über Verseifung zur Dicarbonsäure [S. 415], Decarboxylierung zur 4-Pentensäure [S. 416] und anschließender Reduktion mit $LiAlH_4$ [S. 492]), das mehrfach entgast und mit Argon gesättigt wurde, wurden bei Raumtemperatur gemischt und in einem Quarzschlenkrohr für 24 Stunden dem UV-Licht einer Hg-Hochdrucklampe (200 W) ausgesetzt. Anschließend wurde überschüssiges 5-Penten-1-ol bei 60 °C/20 mbar (absolut) im Rotationsverdampfer abdestilliert. Als Rückstand verblieben 4,34 g, entsprechend 96 Gew.-%, bezogen auf 1,3-Diphosphinopropan, an 1,3-Bis(di-5-hydroxypentyl)phophinopropan.

1.4 Darstellung von [1,3-Bis(di-5-hydroxypentyl)phosphinopropan]palladium-(II)-acetat

0,9 g 1,3-Bis(di-5-hydroxypentyl)phophinopropan wurden in 10 ml mehrfach entgastem und mit Argon gesättigtem Tetrahydrofuran (99,9 Gew.-%; Fa. Merck) gelöst und langsam zu einer Lösung von 0,44 g Palladium-(II)-acetat in 15 ml entgastem, mit Argon gesättigtem Tetrahydrofuran getropft. Zur Vervollständigung der Reaktion wurde bei Raumtemperatur noch 20 Minuten gerührt. Das Lösemittelgemisch wurde bei 60 °C/0,1 mbar (absolut) entfernt und der definierte Palladiumkomplex als braungelbes, hochviskoses Öl isoliert. Es wurden 1,30 g Palladiumkomplex, entsprechend 98 Gew.-%, bezogen auf Palladium-(II)-acetat, erhalten.

2. Polymerisationsbeispiele

Beispiel 1

10 mg [1,3-Bis(di-5-hydroxypentyl)phosphinopropan]palladium-(II)-acetat wurden bei Raumtemperatur unter Stickstoffschutzgas in 30 ml entionisiertem und entgastem Wasser in einem 100 ml-Einhalskolben mit Stickstoffhahn gelöst und mit 26 mg 50 gew.-%iger wässriger Tetrafluoroborsäure (Fa. Merck) angesäuert. In diese Lösung wurden unter Stickstoffatmosphäre 11,5 g 10-Undecensäure (98 Gew.-%; Fa. Aldrich), 2 ml Methanol (99,9 Gew.-%) und 0,3 g Natriumdodecylsulfat gegeben und mittels eines Magnetrührers (500 Umdrehungen pro Minute, 10 Minuten) vollständig emulgiert. Die Emulsion wurde in einen 100 ml-Stahlautoklaven mit magnetischem Rührer überführt und die Luft mittels mehrmaligen Spülens mit Kohlenmonoxid verdrängt. Bei Raumtemperatur wurden 60 bar Kohlenmonoxid aufgepreßt und danach die Reaktionsmischung unter Rühren (500 Umdrehungen pro Minute) auf 60 °C erhitzt und 12 Stunden bei dieser Temperatur gerührt. Anschließend wurde die Reaktionsmischung auf Raumtemperatur abgekühlt und der Stahlautoklav auf 1 bar (absolut) entspannt. Die erhaltene wässrige Copolymerisatdispersion war stabil und zeigte über 10 Wochen keine Phasenseparierung, Abscheidungen oder Koagulatbildung.

Der Koagulatgehalt wurde generell bestimmt, indem man die erhaltene wässrige Copolymerisatdispersion über ein 45 µm-Filtergewebe filtrierte. Das Filtergewebe wurde anschließend mit 50 ml entionisiertem Wasser gespült und bei 100 °C/1 bar (absolut) bis zur Gewichtskonstanz getrocknet. Aus der Gewichtsdifferenz des Filtergewebes vor der Filtration und dem Filtergewebe nach der Filtration und Trocknung wurde der Koagulatgehalt bestimmt. Im vorliegenden Fall konnte ein Koagulatgehalt < 0,1 Gew.-%, bezogen auf die wässrige Polymeriatdispersion festgestellt werden.

Der Feststoffgehalt wurde generell bestimmt, indem ca. 1 g der wässrigen Copolymerisatdispersion in einem offenen Aluminiumtiegel mit einem Innendurchmesser von ca. 3 cm in einem Trockenschrank bei 100 °C und 10 mbar bis zur Gewichtskonstanz getrocknet wurde. Zur Bestimmung des Feststoffgehalts wurden jeweils zwei separate Messungen durchgeführt und der entsprechende Mittelwert gebildet. Im vorliegenden Fall betrug der Feststoffgehalt 25 Gew.-%, bezogen auf die wässrige Copolymerisatdispersion.

Aus dem Feststoffgehalt wurde die mittlere Katalysatoraktivität zu 390 Gramm Copolymerisat pro Gramm Palladium und Stunde errechnet.

Der zahlenmittlere Teilchendurchmesser der Copolymerisatteilchen wurde generell durch dynamische Lichtstreuung an einer 0,005 bis 0,01 gewichtsprozentigen wässrigen Dispersion bei 23 °C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321). Im vorliegenden Fall betrug der mittlere Teilchendurchmesser 270 nm.

Die Bestimmung der Glasübergangstemperatur bzw. des Schmelzpunktes erfolgte generell gemäß DIN 53765 mittels eines DSC820-Geräts, Serie TA8000 der Fa. Mettler-Toledo. Im vorliegenden Fall betrug die Glasübergangstemperatur -18 °C.

Beispiel 2

10 mg [1,3-Bis(di-5-hydroxypentyl)phosphinopropan]palladium-(II)-acetat wurden bei Raumtemperatur unter Stickstoffschutzgas in einem 250 ml-Einhalskolben mit Stickstoffhahn in 100 ml entionisiertem und entgastem Wasser gelöst und mit 26 mg 50 gew.-%iger wässriger Tetrafluoroborsäure (Fa. Merck) angesäuert. In diese Lösung wurden unter Stickstoffatmosphäre 30 g 1-Hexen (97 Gew.-%; Fa. Aldrich), 5 g 10-Undecensäure und 1,0 g Natriumdodecylsulfat gegeben und mittels eines Magnetrührers (500 Umdrehungen pro Minute, 10 Minuten) vollständig emulgiert. Die Emulsion wurde in einen mit einem Stabrührer ausgerüsteten 300 ml-Stahlautoklaven überführt und die Luft mittels mehrmaligen Spülens mit Kohlenmonoxid verdrängt. Bei Raumtemperatur wurden 60 bar Kohlenmonoxid aufgepreßt und danach die Reaktionsmischung unter Rühren (500 Umdrehungen pro Minute) auf 60 °C aufgeheizt und 10 Stunden bei dieser Temperatur gerührt. Anschließend wurde die Reaktionsmischung auf Raumtemperatur abgekühlt und der Stahlautoklav auf 1 bar (absolut) entspannt. In einem Scheidetrichter wurde nicht umgesetztes Alken von der wässrigen

Copolymerisatdispersion abgetrennt, von der ca. 110 g anfielen. Der Koagulatgehalt der wässrigen Polymeriatdispersion betrug < 0,1 Gew.-%. Der Feststoffgehalt wurde zu 14 Gew.-% bestimmt, entsprechend einer mittleren Katalysatoraktivität von 980 Gramm Copolymerisat pro Gramm Palladium und Stunde. Der zahlenmittlere Teilchendurchmesser betrug 100 nm. Darüber hinaus wurde die Glasübergangstemperatur zu -35 °C bestimmt. Die erhaltene wässrige Copolymerisatdispersion war stabil und zeigte über 10 Wochen keine Phasenseparierung, Abscheidungen oder Koagulatbildung.

Vergleichsbeispiel

Die Herstellung des Vergleichsbeispiels erfolgte analog Beispiel 2 mit der Ausnahme, dass keine 10-Undecensäure eingesetzt wurde. Nach Phasentrennung wurden ca. 110 g wässrige Copolymerisatdispersion mit einem Feststoffgehalt von 9 Gew.-% erhalten. Der Koagulatgehalt der wässrigen Copolymerisatdispersion betrug ca. 5 Gew.-% und der zahlenmittlere Teilchendurchmesser wurde zu 80 nm bestimmt. Darüber hinaus wurde eine Glasübergangstemperatur von -30 °C ermittelt. Wesentlich ist jedoch, dass die erhaltene wässrige Copolymerisatdispersion instabil war und innerhalb weniger Stunden eine beginnende Copolymerisatabscheidung (ein sogenanntes "Aufrahmen") beobachtet wurde.

Beispiel 3

Die Durchführung von Beispiel 3 erfolgte analog zu Beispiel 2 mit der Ausnahme, dass kein 1-Hexen eingesetzt wurde und anstelle von 60 bar Kohlenmonoxid 30 bar Kohlenmonoxid und 30 bar Ethen aufgepresst wurden.

Die erhaltene wässrige Copolymerisatdispersion wies einen Feststoffgehalt von 8 Gew.-% auf, entsprechend einer mittleren Katalysatoraktivität von 500 g Copolymerisat pro Gramm Palladium und Stunde. Der Koagulatgehalt wurde zu < 0,1 Gew.-% und der zahlenmittlere Teilchendurchmesser zu 500 nm bestimmt. Das gebildete Copolymerisat wies einen Schmelzpunkt von 210 °C auf.

Darüber hinaus war die erhaltene wässrige Copolymerisatdispersion stabil und zeigte über 10 Wochen keine Phasenseparierung, Abscheidungen oder Koagulatbildung.

Beispiel 4

Die Durchführung von Beispiel 4 erfolgte analog zu Beispiel 3 mit der Ausnahme, dass man anstelle von 5 g 30 g 10-Undecensäure einsetzte und anstelle von 30 bar Ethen 9 bar Propen und anstelle von 30 bar 51 bar Kohlenmonoxid aufgepresst wurden.

Die erhaltene wässrige Copolymerisatdispersion wies einen Feststoffgehalt von 17 Gew.-% auf, entsprechend einer mittleren Katalysatoraktivität von 1070 g Copolymerisat pro Gramm Palladium und Stunde. Der Koagulatgehalt wurde zu < 0,1 Gew.-% und der zahlenmittlere Teilchendurchmesser zu 430 nm bestimmt. Das gebildete Copolymerisat wies eine Glasübergangstemperatur von -10 °C auf.

Darüber hinaus war die erhaltene wässrige Copolymerisatdispersion stabil und zeigte über 10 Wochen keine Phasenseparierung, Abscheidungen oder Koagulatbildung.

Beispiel 5

Die Durchführung von Beispiel 5 erfolgte analog zu Beispiel 3 mit der Ausnahme, dass anstelle von 10 mg 15 mg [1,3-Bis(di-5-hydroxypentyl)phosphinopropan]palladium-(II)-acetat, anstelle 26 mg 31 mg 50 gew.-%iger wässriger Tetrafluoroborsäure, anstelle von Ethen 30 g 1-Buten eingesetzt und anstelle von 30 bar 60 bar Kohlenmonoxid aufgepresst wurden.

Die erhaltene wässrige Copolymerisatdispersion wies einen Feststoffgehalt von 14 Gew.-% auf, entsprechend einer Katalysatoraktivität von 730 g Copolymerisat pro Gramm Palladium und Stunde. Der Koagulatgehalt wurde zu < 0,1 Gew.-% und der zahlenmittlere Teilchendurchmesser zu 380 nm bestimmt. Das gebildete Copolymerisat wies eine Glasübergangstemperatur von -17 °C auf.

Darüber hinaus war die erhaltene wässrige Copolymerisatdispersion stabil und zeigte über 10 Wochen keine Phasenseparierung, Abscheidungen oder Koagulatbildung.

## Patentansprüche

1. Verfahren zur Herstellung wässriger Copolymerisatdispersionen von Copolymerisaten aus Kohlenmonoxid und wenigstens einer olefinisch ungesättigten Verbindung, **dadurch gekennzeichnet, dass** man die Copolymerisation

von Kohlenmonoxid und wenigstens einer olefinisch ungesättigten Verbindung in wässrigem Medium in Gegenwart von

a1) Metallkomplexen der allgemeinen Formel (I)

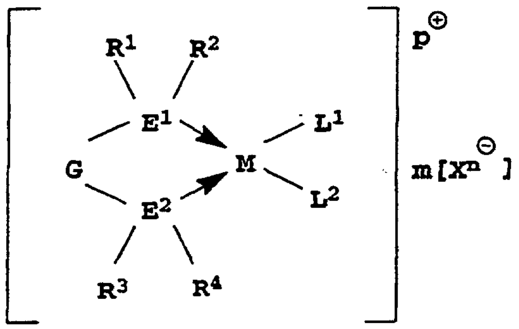

(I)

in der die Substituenten und Indizes die folgende Bedeutung haben:

G 5-, 6- oder 7-atomiges carbocyclisches Ringsystem ohne oder mit einem oder mehreren Heteroatomen, $-(CR^b_2)_r-$, $-(CR^b_2)_s-Si(R^a)_2-(CR^b_2)_t-$, -A-O-B- oder $-A-Z(R^5)-B-$ mit

$R^5$ Wasserstoff, unsubstituiertes oder mit funktionellen Gruppen , welche Atome der Gruppen IVA, VA, VIA oder VIIA des Periodensystems der Elemente enthalten, substituiertes $C_1$- bis $C_{20}$-Alkyl, $C_3$- bis $C_{14}$-Cycloalkyl, $C_6$- bis $C_{14}$-Aryl oder Alkylaryl mit 1 bis 20 C-Atomen im Alkylrest und 6 bis 14 C-Atomen im Arylrest, $-N(R^b)_2$, $-Si(R^c)_3$ oder einen Rest der. allgemeinen Formel (II)

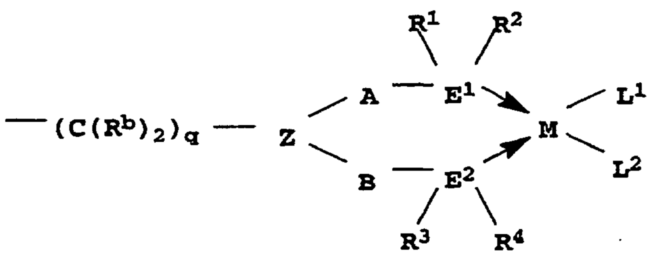

(II)

in der

q eine ganze Zahl von 0 bis 20 bedeutet und die weiteren Substituenten in Formel (II) die gleiche Bedeutung wie in Formel (I) haben,

A, B $-(CR^b_2)_{r'}-$, $-(CR^b_2)_s-Si(R^a)_2-(CR^b_2)_t-$, $-N(R^b)-$, ein r'-, s- oder t-atomiger Bestandteil eines Ringsystems oder zusammen mit Z ein (r'+1)-, (s+1)- oder (t+1)-atomiger Bestandteil eines Heterocyclus,

$R^a$ unabhängig voneinander lineares oder verzweigtes $C_1$- bis $C_{20}$-Alkyl, $C_3$- bis $C_{14}$-Cycloalkyl, $C_6$- bis $C_{14}$-Aryl oder Alkylaryl mit 1 bis 20 C-Atomen im Alkylteil und 6 bis 14 C-Atomen im Arylteil, wobei die genannten Reste auch substituiert sein können,

$R^b$ wie $R^a$, zusätzlich Wasserstoff oder $-Si(R^c)_3$,

$R^c$ unabhängig voneinander lineares oder verzweigtes $C_1$- bis $C_{20}$-Alkyl, $C_3$- bis $C_{14}$-Cycloalkyl, $C_6$- bis $C_{14}$-Aryl oder Alkylaryl mit 1 bis 20 C-Atomen im Alkylteil und 6 bis 14 C-Atomen im Arylteil, wobei die genannten Reste auch substituiert sein können,

r 1, 2, 3 oder 4 und

r' 1 oder 2,

s, t 0, 1 oder 2, wobei $1 \leq s+t \leq 3$,

Z ein nichtmetallisches Element aus der Gruppe VA des Periodensystems der Elemente,

M ein Metall, ausgewählt aus den Gruppen VIIIB, IB oder IIB des Periodensystems der Elemente,

$E^1$, $E^2$ ein nichtmetallisches Element aus der Gruppe VA des Periodensystems der Elemente,

$R^1$ bis $R^4$ unabhängig voneinander lineares oder verzweigtes $C_2$- bis $C_{20}$-Alkyl, $C_3$- bis $C_{14}$-Cycloalkyl, $C_6$- bis $C_{14}$-Aryl oder Alkylaryl mit 1 bis 20 C-Atomen im Alkylteil und 6 bis 14 C-Atomen im Arylteil, wobei mindestens einer der Reste $R^1$ bis $R^4$ über mindestens eine Hydroxy-, Amino- oder Säuregruppe verfügt oder eine ionisch funktionelle Gruppe enthält,

$L^1$, $L^2$ formal geladene oder neutrale Liganden,

X formal ein- oder mehrwertige Anionen,

p 0, 1, 2, 3 oder 4,

m, n 0, 1, 2, 3 oder 4,

wobei $p = m \times n$,

b) einem Dispergiermittel und gegebenenfalls

c) einer Hydroxyverbindung
durchführt und als wenigstens eine olefinisch ungesättigte Verbindung eine das Strukturelement der allgemeinen Formel (III)

$$-CH=CH-Q-Pol_{\pi} \quad (III),$$

enthaltende Verbindung oder eine Gemisch aus einer das Strukturelement der allgemeinen Formel (III) enthaltenden Verbindung und einer olefinisch ungesättigten Verbindung mit 2 bis 20 Kohlenstoffatomen einsetzt, wobei

Q eine unpolare organische Gruppe ist, ausgewählt aus der Gruppe umfassend lineares oder verzweigtes $C_1$- bis $C_{20}$-Alkyl, $C_3$- bis $C_{14}$-Cycloalkyl, $C_6$- bis $C_{14}$-Aryl, Alkylaryl mit 1 bis 20 C-Atomen im Alkylteil und 6 bis 14 C-Atomen im Arylteil und

$\pi$ eine ganze Zahl ungleich 0, bevorzugt 1, 2, 3 oder 4 ist und

Pol ein polarer Rest ist, ausgewählt aus der Gruppe umfassend

- Carboxyl, Sulfonyl, Sulfat, Phosphonyl, Phosphat sowie deren Alkalimetall-, Erdalkalimetall- und/oder Ammoniumsalze,

- Alkanolammonium-, Pyridinium-, Imidazolinium-, Oxazolinium-, Morpholinium-, Thiazolinium-, Chinolinium-, Isochinolinium-, Tropylium-, Sulfonium-, Guanidiniumund Phosphoniumverbindungen sowie Ammoniumverbindungen der allgemeinen Formel (IV)

$$-N^{\oplus}R^6R^7R^8 \quad (IV),$$

wobei

$R^6$, $R^7$ und $R^8$ unabhängig voneinander für Wasserstoff und lineares oder verzweigtes $C_1$- bis $C_{20}$-Alkyl steht, oder

- eine Gruppe der allgemeinen Formel (V), (VI) oder (VII)

$$-(EO)_k-(PO)_l-R^9 \quad (V),$$

$$-(PO)_l-(EO)_k-R^9 \quad (VI),$$

$$-(EO_k/PO_l)-R^9 \quad (VII),$$

wobei

EO für eine $-CH_2-CH_2-O$-Gruppe,

PO für eine $-CH_2-CH(CH_3)-O$- oder eine $-CH(CH_3)-CH_2-O$-Gruppe steht,

k und l für Zahlenwerte von 0 bis 50 stehen, wobei aber k und l nicht gleichzeitig 0 sind, und

$R^9$ Wasserstoff, unabhängig voneinander lineares oder verzweigtes $C_1$- bis $C_{20}$-Alkyl oder $-SO_3H$ sowie dessen entsprechendes Alkalimetall-, Erdalkalimetall- und/oder Ammoniumsalz bedeutet.

**2.** Verfahren nach Anspruch 1, **dadurch gekennzeichnet, dass** man die Copolymerisation in Gegenwart von

a1) Metallkomplexen der allgemeinen Formel (I),

a2) einer Säure

b) einem Dispergiermittel und gegebenenfalls

c) einer Hydroxyverbindung

durchführt.

**3.** Verfahren zur Herstellung wässriger Copolymerisatdispersionen von Copolymerisaten aus Kohlenmonoxid und wenigstens einer olefinisch ungesättigten Verbindung, **dadurch gekennzeichnet, dass** man die Copolymerisation von Kohlenmonoxid und wenigstens einer olefinisch ungesättigten Verbindung in wässrigem Medium in Gegenwart von

a1.1) eines Metalls M, ausgewählt aus der Gruppe VIIIB, IB oder IIB des Periodensystems der Elemente, das in Salzform oder als Komplexsalz vorliegt,

a1.2) eines Chelatliganden der allgemeinen Formel (VIII)

$$(R^1)(R^2)E^1\text{-}G\text{-}E^2(R^3)(R^4) \quad (VIII),$$

in welcher die Substituenten und Indizes die folgende Bedeutung haben:

G 5-, 6- oder 7-atomiges carbocyclisches Ringsystem ohne oder mit einem oder mehreren Heteroatomen, $-(CR^b_2)_r-$, $-(CR^b_2)_s-Si(R^a)_2-(CR^b_2)_t-$, -A-O-B- oder $-A-Z(R^5)-B-$ mit

$R^5$ Wasserstoff, unsubstituiertes oder mit funktionellen Gruppen , welche Atome der Gruppen IVA, VA, VIA oder VIIA des Periodensystems der Elemente enthalten, substituiertes $C_1$- bis $C_{20}$-Alkyl, $C_3$- bis $C_{14}$-Cy-

cloalkyl, $C_6$- bis $C_{14}$-Aryl oder Alkylaryl mit 1 bis 20 C-Atomen im Alkylrest und 6 bis 14 C-Atomen im Arylrest, $-N(R^b)_2$, $-Si(R^c)_3$ oder einen Rest der allgemeinen Formel (IX)

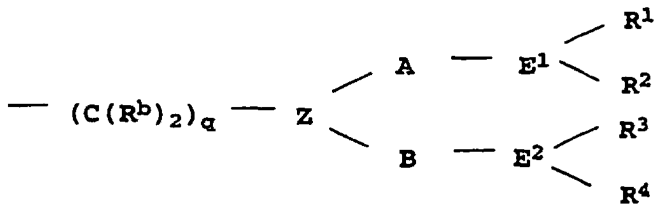
(IX)

in der

q eine ganze Zahl von 0 bis 20 bedeutet und die weiteren Substituenten in Formel (IX) die gleiche Bedeutung wie in Formel (II) haben,

A, B $-(CR^b_2)_{r'}$- oder $-(CR^b_2)_s-Si(R^a)_2-(CR^b_2)_t$- oder $-N(R^b)$-, ein r'-, s- oder t-atomiger Bestandteil eines Ringsystems oder zusammen mit Z ein (r'+1)-, (s+1)- oder (t+1)-atomiger Bestandteil eines Heterocyclus,

$R^a$ unabhängig voneinander lineares oder verzweigtes $C_1$- bis $C_{20}$-Alkyl, $C_3$- bis $C_{14}$-Cycloalkyl, $C_6$- bis $C_{14}$-Aryl oder Alkylaryl mit 1 bis 20 C-Atomen im Alkylteil und 6 bis 14 C-Atomen im Arylteil, wobei die genannten Reste auch substituiert sein können,

$R^b$ wie $R^a$, zusätzlich Wasserstoff oder $-Si(R^c)_3$,

$R^c$ unabhängig voneinander lineares oder verzweigtes $C_1$- bis $C_{20}$-Alkyl, $C_3$- bis $C_{14}$-Cycloalkyl, $C_6$- bis $C_{14}$-Aryl oder Alkylaryl mit 1 bis 20 C-Atomen im Alkylteil und 6 bis 14 C-Atomen im Arylteil, wobei die genannten Reste auch substituiert sein können,

r 1, 2, 3 oder 4 und

r' 1 oder 2,

s, t 0, 1 oder 2, wobei $1 \leq s+t \leq 3$,

Z ein nichtmetallisches Element aus der Gruppe VA des Periodensystems der Elemente,

$E^1$, $E^2$ ein nichtmetallisches Element aus der Gruppe VA des Periodensystems der Elemente,

$R^1$ bis $R^4$ unabhängig voneinander lineares oder verzweigtes $C_2$- bis $C_{20}$-Alkyl, $C_3$- bis $C_{14}$-Cycloalkyl, $C_6$- bis $C_{14}$-Aryl oder Alkylaryl mit 1 bis 20 C-Atomen im Alkylteil und 6 bis 14 C-Atomen im Arylteil, wobei mindestens einer der Reste $R^1$ bis $R^4$ über mindestens eine Hydroxy-, Amino- oder Säuregruppe verfügt oder eine ionisch funktionelle Gruppe enthält,

b) eines Dispergiermittels und gegebenenfalls

c) einer Hydroxyverbindung

durchführt und als wenigstens eine olefinisch ungesättigte Verbindung eine das Strukturelement der allgemeinen Formel (III) enthaltende Verbindung oder ein Gemisch aus einer das Strukturelement der allgemeinen Formel (III) enthaltenden Verbindung und einer olefinisch ungesättigten Verbindung mit 3 bis 20 Kohlenstoffatomen einsetzt.

4. Verfahren nach Anspruch 3, **dadurch gekennzeichnet, dass** man die Copolymerisation in Gegenwart

a1.1) eines Metalls M, ausgewählt aus der Gruppe VIIIB, IB oder IIB des Periodensystems der Elemente, das

in Salzform oder als Komplexsalz vorliegt,

a1.2) eines Chelatliganden der allgemeinen Formel (VIII),

a2) einer Säure

b) eines Dispergiermittels und gegebenenfalls

c) einer Hydroxyverbindung

durchführt.

5. Verfahren nach den Ansprüchen 1 bis 4, **dadurch gekennzeichnet, dass** als eine das Strukturelement der allgemeinen Formel (III) enthaltende Verbindung ein $\alpha$-Olefin der allgemeinen Formel (X)

$$H_2C{=}CH\text{-}Q\text{-}Pol_\pi \qquad (X),$$

eingesetzt wird.

6. Verfahren nach den Ansprüchen 1 bis 5, **dadurch gekennzeichnet, dass** die Hydroxyverbindung c) ein ein- oder mehrwertiger Alkohol und/oder ein Zucker ist.

7. Verfahren nach den Ansprüchen 2 und 4, **dadurch gekennzeichnet, dass** man als Säure eine Lewis-Säure, ausgewählt aus der Gruppe Bortrifluorid, Antimonpentafluorid oder Triarylborane oder eine Protonensäure ausgewählt aus der Gruppe Schwefelsäure, p-Toluolsulfonsäure, Tetrafluorborsäure, Trifluormethansulfonsäure, Perchlorsäure oder Trifluoressigsäure verwendet.

8. Verfahren nach den Ansprüchen 1 bis 7, **dadurch gekennzeichnet, dass** die Reste $R^1$ bis $R^4$ lineare, verzweigte oder Carbocyclen enthaltende $C_2$- bis $C_{20}$-Alkyleinheiten, $C_3$- bis $C_{14}$-Cycloalkyleinheiten, $C_6$- bis $C_{14}$-Aryleinheiten oder Alkylaryleinheiten mit 1 bis 20 C-Atomen im Alkylteil und 6 bis 14 C-Atomen im Arylteil bedeuten, und mindestens einer der Reste $R^1$ bis $R^4$ über mindestens eine Hydroxy-, Amino-, Carbonsäure-, Phosphorsäure-. Ammonium- oder Sulfonsäuregruppe verfügt.

9. Verfahren nach den Ansprüchen 1 oder 3, **dadurch gekennzeichnet, dass** die Reste $R^1$ bis $R^4$ lineare, verzweigte oder Carbocyclen enthaltende $C_2$- bis $C_{20}$-Alkyleinheiten, $C_3$- bis $C_{14}$-Cycloalkyleinheiten, $C_6$- bis $C_{14}$-Aryleinheiten oder Alkylaryleinheiten mit 1 bis 20 C-Atomen im Alkylteil und 6 bis 14 C-Atomen im Arylteil bedeuten, und mindestens einer der Reste $R^1$ bis $R^4$ mit mindestens einer freien Carbonsäure- oder Sulfonsäuregruppe substituiert ist.

10. Verfahren nach den Ansprüchen 1 bis 9, **dadurch gekennzeichnet, dass** man als Dispergiermittel b) einen anionischen, kationischen und/oder nichtionischen Emulgator verwendet.

11. Wässrige Copolymerisatdispersion hergestellt nach einem Verfahren gemäß einem der Ansprüche 1 bis 10.

12. Copolymerisatpulver hergestellt aus einer wässrigen Copolymerisatdispersion gemäß Anspruch 11.

13. Verwendung einer wässrigen Copolymerisatdispersion gemäß Anspruch 11 als Bindemittel in Klebstoffen, Dichtmassen, Kunststoffputzen und Anstrichmitteln.

14. Verwendung von Copolymerisatpulver gemäß Anspruch 12 als Bindemittel in Klebstoffen, Dichtmassen, Kunststoffputzen und Anstrichmittel sowie zur Modifizierung von mineralischen Bindemitteln oder anderen Kunststoffen.

## Claims

1. A process for the preparation of aqueous copolymer dispersions of copolymers of carbon monoxide and at least

one olefinically unsaturated compound, wherein the copolymerization of carbon monoxide and at least one olefinically unsaturated compound is carried out in an aqueous medium in the presence of

a1) metal complexes of the formula (I)

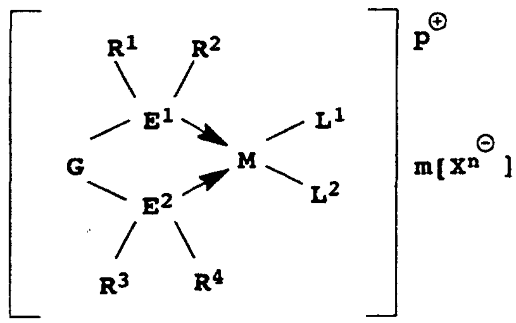

(I)

wherein

G is a 5-, 6- or 7-atom carbocyclic ring system with or without one or more heteroatoms, $-(CR^b_2)_r-$, $-(CR^b_2)_s-Si(R^a)_2-(CR^b_2)_t-$, -A-O-B- or $-A-Z(R^5)-B-$,

$R^5$ is hydrogen, or is $C_1$- to $C_{20}$-alkyl, $C_3$- to $C_{14}$-cycloalkyl, $C_6$- to $C_{14}$-aryl or alkylaryl having 1 to 20 carbon atoms in the alkyl radical and 6 to 14 carbon atoms in the aryl radical, which are unsubstituted or substituted by functional groups which contain atoms of groups IVA, VA, VIA or VIIA of the Periodic Table of the Elements, $-N(R^b)_2$, $-Si(R^c)_3$ or a radical of the formula (II)

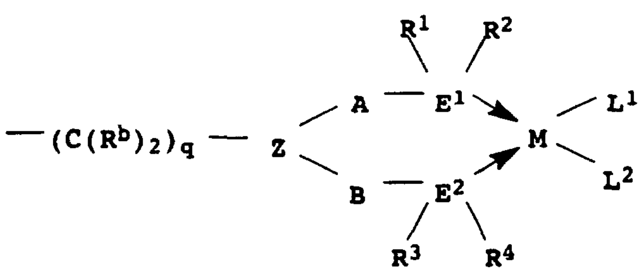

(II)

where

q is an integer from 0 to 20 and the further substituents in formula (II) have the same meanings as those in formula (I),

A, B are each $-(CR^b_2)_{r'}-$, $-(CR^b_2)_s-Si(R^a)_2-(CR^b_2)_t-$, $-N(R^b)-$, an r'-, s- or t-atom component of a ring system or, together with Z, an (r'+1)-, (s+1)- or (t+1)-atom component of a heterocyclic structure,

$R^a$ independently of one another, are linear or branched $C_1$- to $C_{20}$-alkyl, $C_3$- to $C_{14}$-cycloalkyl, $C_6$- to $C_{14}$-aryl or alkylaryl having 1 to 20 carbon atoms in the alkyl moiety and 6 to 14 carbon atoms in the aryl moiety, it also being possible for said radicals to be substituted,

$R^b$ has the same meanings as $R^a$, and may additionally be hydrogen or $-Si(R^c)_3$,

$R^c$ independently of one another, are linear or branched $C_1$- to $C_{20}$-alkyl, $C_3$- to $C_{14}$-cycloalkyl, $C_6$- to $C_{14}$-aryl or alkylaryl having 1 to 20 carbon atoms in the alkyl moiety and 6 to 14 carbon atoms in the aryl moiety, it also being possible for said radicals to be substituted,

r is 1, 2, 3 or 4 and

r' is 1 or 2,

s, t are each 0, 1 or 2, where $1 \leq s+t \leq 3$,

Z is a nonmetallic element from group VA of the Periodic Table of the Elements,

M is a metal selected from the groups VIIIB, IB or IIB of the Periodic Table of the Elements,

$E^1$, $E^2$ are each a nonmetallic element from group VA of the Periodic Table of the Elements,

$R^1$ to $R^4$ independently of one another, are each linear or branched $C_2$- to $C_{20}$-alkyl, $C_3$- to $C_{14}$-cycloalkyl, $C_6$- to $C_{14}$-aryl or alkylaryl having 1 to 20 carbon atoms in the alkyl moiety and 6 to 14 carbon atoms in the aryl moiety, at least one of the radicals $R^1$ to $R^4$ having at least one hydroxyl, amino or acid group or containing an ionic functional group,

$L^1$, $L^2$ are formally charged or neutral ligands,

X are formally monovalent or polyvalent anions,

p is 0, 1, 2, 3 or 4,

m, n are each 0, 1, 2, 3 or 4,

where p is m x n,

b) a dispersant and, if required,

c) a hydroxy compound

and a compound containing the structural element of the formula (III)

$$-CH=CH-Q-Pol_{\pi} \quad (III),$$

or a mixture of a compound containing the structural element of the formula (III) and an olefinically unsaturated compound of 2 to 20 carbon atoms is used as at least one olefinically unsaturated compound,
where

Q is a nonpolar organic group selected from the group consisting of linear or branched $C_1$- to $C_{20}$-alkyl, $C_3$- to $C_{14}$-cycloalkyl, $C_6$- to $C_{14}$-aryl, alkylaryl having 1 to 20 carbon atoms in the alkyl moiety and 6 to 14 carbon atoms in the aryl moiety and

$\pi$ is an integer not equal to 0, and is preferably 1, 2, 3 or 4, and

Pol is a polar radical selected from the group consisting of

- carboxyl, sulfonyl, sulfate, phosphonyl, phosphate and the alkali metal, alkaline earth metal and/or ammonium salts thereof,

- alkanolammonium, pyridinium, imidazolinium, oxazolinium, morpholinium, thiazolinium, quinolinium, isoquinolinium, tropylium, sulfonium, guanidinium and phosphonium compounds and ammonium compounds of the formula (IV)

$$-N^{\oplus}R^6R^7R^8 \quad (IV),$$

where $R^6$, $R^7$ and $R^8$, independently of one another, are each hydrogen or linear or branched $C_1$- to $C_{20}$-alkyl,

or

- a group of the formula (V), (VI) or (VII)

$$-(EO)_k-(PO)_l-R^9 \quad (V),$$

$$-(PO)_l-(EO)_k-R^9 \quad (VI),$$

$$-(EO_k/PO_l)-R^9 \quad (VII),$$

where

EO is a $-CH_2-CH_2-O-$ group,

PO is a $-CH_2-CH(CH_3)-O-$ or a $-CH(CH_3)-CH_2-O-$ group,

k and l are each from 0 to 50, but k and l are not simultaneously 0, and

$R^9$ is hydrogen, independently of one another, linear or branched $C_1$- to $C_{20}$-alkyl or $-SO_3H$ or the corresponding alkali metal, alkaline earth metal and/or ammonium salts thereof.

**2.** A process as claimed in claim 1, wherein the copolymerization is carried out in the presence of

a1) metal complexes of the formula (I),

a2) an acid,

b) a dispersant and, if desired,

c) a hydroxy compound.

**3.** A process for the preparation of aqueous copolymer dispersions of copolymers of carbon monoxide and at least one olefinically unsaturated compound, wherein the copolymerization of carbon monoxide and at least one olefinically unsaturated compound is carried out in an aqueous medium in the presence of

a1.1) a metal M, selected from group VIIIB, IB or IIB of the Periodic Table of the Elements, which is present in salt form or as a complex salt,

a1.2) a chelate ligand of the formula (VIII)

$$(R^1)(R^2)E^1-G-E^2(R^3)(R^4) \quad (VIII),$$

where

G is a 5-, 6- or 7-atom carbocyclic ring system with or without one or more heteroatoms, $-(CR^b_2)_r-$, $-(CR^b_2)_s-Si(R^a)_2-(CR^b_2)_t-$, -A-O-B- or $-A-Z(R^5)-B-$,

$R^5$ is hydrogen, or is $C_1$- to $C_{20}$-alkyl, $C_3$- to $C_{14}$-cycloalkyl, $C_6$- to $C_{14}$-aryl or alkylaryl having 1 to 20 carbon atoms in the alkyl radical and 6 to 14 carbon atoms in the aryl radical, which are unsubstituted or substituted by functional groups which contain atoms of groups IVA, VA, VIA or VIIA of the Periodic Table of the Elements, $-N(R^b)_2$, $-Si(R^c)_3$ or a radical of the formula (IX)

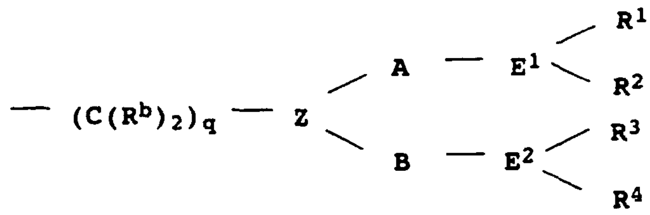

(IX)

where

q is an integer from 0 to 20 and the further substituents in formula (IX) have the same meanings as those in formula (II),

A, B are each $-(CR^b{}_2)_{r'}-$ or $-(CR^b{}_2)_s-Si(R^a)_2-(CR^b{}_2)_t-$ or $-N(R^b)-$, an r'-, s- or t-atom component of a ring system or, together with Z, an (r'+1)-, (s+1)- or (t+l)-atom component of a heterocyclic structure,

$R^a$ independently of one another, are linear or branched $C_1$- to $C_{20}$-alkyl, $C_3$- to $C_{14}$-cycloalkyl, $C_6$- to $C_{14}$-aryl or alkylaryl having 1 to 20 carbon atoms in the alkyl moiety and 6 to 14 carbon atoms in the aryl moiety, it also being possible for said radicals to be substituted,

$R^b$ has the same meanings as $R^a$, and may additionally be hydrogen or $-Si(R^c)_3$,

$R^c$ independently of one another, are linear or branched $C_1$- to $C_{20}$-alkyl, $C_3$- to $C_{14}$-cycloalkyl, $C_6$- to $C_{14}$-aryl or alkylaryl having 1 to 20 carbon atoms in the alkyl moiety and 6 to 14 carbon atoms in the aryl moiety, it also being possible for said radicals to be substituted,

r is 1, 2, 3 or 4,

r' is 1 or 2,

s and t are each 0, 1 or 2, where $1 \leq s+t \leq 3$,

Z is a nonmetallic element from group VA of the Periodic Table of the Elements,

$E^1$ and $E^2$ are each a nonmetallic element from group VA of the Periodic Table of the Elements,

$R^1$ to $R^4$ independently of one another, are linear or branched $C_2$- to $C_{20}$-alkyl, $C_3$- to $C_{14}$-cycloalkyl, $C_6$- to $C_{14}$-aryl or alkylaryl having 1 to 20 carbon atoms in the alkyl moiety and 6 to 14 carbon atoms in the aryl moiety, at least one of the radicals $R^1$ to $R^4$ having at least one hydroxyl, amino or acid group or containing an ionic functional group,

b) a dispersant and, if required,

c) a hydroxy compound

and a compound containing the structural element of the formula (III) or a mixture of a compound containing the structural element of the formula (III) and an olefinically unsaturated compound of 3 to 20 carbon atoms is used as at least one olefinically unsaturated compound.

**4.** A process as claimed in claim 3, wherein the copolymerization is carried out in the presence of

a1.1) a metal M selected from the group VIIIB, IB or IIB of the Periodic Table of the Elements, which is present in salt form or as a complex salt,

a1.2) a chelate ligand of the formula (VIII),

a2) an acid,

b) a dispersant and, if required,

c) a hydroxy compound.

**5.** A process as claimed in any of claims 1 to 4, wherein an α-olefin of the formula (X)

$$H_2C{=}CH\text{-}Q\text{-}Pol_\pi \quad (X)$$

is used as a compound containing the structural element of the formula (III).

**6.** A process as claimed in any of claims 1 to 5, wherein the hydroxy compound c) is a monohydric or polyhydric alcohol and/or a sugar.

**7.** A process as claimed in claims 2 and 4, wherein the acid used is a Lewis acid selected from the group consisting of boron trifluoride, antimony pentafluoride and triarylboranes or a protic acid selected from the group consisting of sulfuric acid, p-toluene sulfonic acid, tetrafluoroboric acid, trifluoromethanesulfonic acid, perchloric acid and trifluoroacetic acid.

**8.** A process as claimed in any of claims 1 to 7, wherein $R^1$ to $R^4$ are linear, branched or carbocycle-containing $C_2$- to $C_{20}$-alkyl units, $C_3$- to $C_{14}$-cycloalkyl units, $C_6$- to $C_{14}$-aryl units or alkylaryl units having 1 to 20 carbon atoms in the alkyl moiety and 6 to 14 carbon atoms in the aryl moiety, and at least one of the radicals $R^1$ to $R^4$ has at least one hydroxyl, amino, carboxyl, phosphoric acid, ammonium or sulfo group.

**9.** A process as claimed in claim 1 or 3, wherein $R^1$ to $R^4$ are linear, branched or carbocycle-containing $C_2$- to $C_{20}$-alkyl units, $C_3$- to $C_{14}$-cycloalkyl units, $C_6$- to $C_{14}$-aryl units or alkylaryl units having 1 to 20 carbon atoms in the alkyl moiety and 6 to 14 carbon atoms in the aryl moiety, and at least one of the radicals $R^1$ to $R^4$ is substituted by at least one free carboxyl or sulfo group.

**10.** A process as claimed in any of claims 1 to 9, wherein the dispersant b) used is an anionic, cationic and/or nonionic emulsifier.

**11.** An aqueous copolymer dispersion prepared by a process as claimed in any of claims 1 to 10.

**12.** A copolymer powder prepared from an aqueous copolymer dispersion as claimed in claim 11.

**13.** The use of an aqueous copolymer dispersion as claimed in claim 11 as a binder in adhesives, sealing compounds, plastics renders and coating materials.

**14.** The use of a copolymer powder as claimed in claim 12 as a binder in adhesives, sealing compounds, plastics renders and coating materials and for the modification of mineral binders or other plastics.

## Revendications

**1.** Procédé de production de dispersions aqueuses de copolymères contenant des copolymères de monoxyde de carbone et d'au moins un composé oléfiniquement insaturé, **caractérisé en ce que** l'on entreprend la copolymérisation de monoxyde de carbone et d'au moins un composé oléfiniquement insaturé en milieu aqueux et en présence de

a1) des complexes métalliques de la formule générale (I)

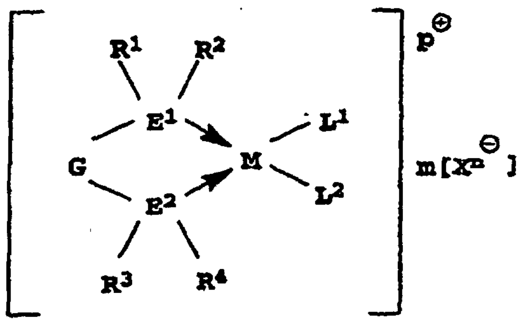

(I)

dans laquelle les substituants et indice ont les significations suivantes:

G un système à noyau carbocyclique à 5, 6, ou 7 atomes, sans ou avec un ou plusieurs hétéroatomes, $-(CR^b_2)_r-$, $-(CR^b_2)_s-$ $Si(R^a)_2$, $-(CR^b_2)_t-$, -A-O-B- ou $-A-Z(R^5)-B-$, avec

$R^5$ représentant de l'hydrogène, des groupes fonctionnels non substitués ou substitués par des groupes fonctionnels contenant des atomes des groupes IVA, VA, VIA ou VIIA du système périodique des éléments, ou des radicaux substitués alkyle en $C_1$ à $C_{20}$, cycloalkyle en $C_3$ à $C_{14}$, aryle en $C_6$ à $C_{14}$ ou alkylaryle comportant de 1 à 20 atomes de C dans le radical alkyle et de 6 à 14 atomes de C dans le radical aryle, $-N(R^b)_2$, $-Si(R^c)_3$ ou un reste de formule générale (II)

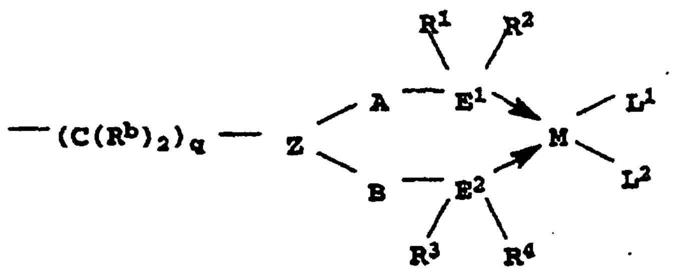

(II)

dans laquelle

q représente un nombre entier de 0 à 20 et les autres substituants ont, dans la formule (II), la même signification que dans la formule (I),

A,B représentent $-(CR^b_2)_{r'}-$, $-(CR^b_2)_s-Si(R^a)_2$, $-(CR^b_2)_t-$, $-N(R^b)-$, un constituant à r', s ou t atomes d'un système de noyau, ou forment ensemble avec Z un constituant à (r' + 1), (s + 1) ou (t + 1) atomes d'un hétérocycle,

$R^a$ représentent indépendamment l'un de l'autre des radicaux alkyle en $C_1$ à $C_{20}$ linéaires ou ramifiés, cycloalkyle en $C_3$ à $C_{14}$, aryle en $C_6$ à $C_{14}$ ou alkylaryle comportant de 1 à 20 atomes de C dans la partie alkyle et de 6 à 14 atomes de C dans la partie aryle, les restes cités pouvant aussi être substitués,

$R^b$ comme $R^a$, avec en plus de l'hydrogène ou $-Si(R^c)_3$,

$R^c$ représentent indépendamment l'un de l'autre des radicaux alkyle en $C_1$ à $C_{20}$ linéaires ou ramifiés, cycloalkyle en $C_3$ à $C_{14}$, aryle en $C_6$ à $C_{14}$ ou alkylaryle comportant de 1 à 20 atomes de C dans la partie alkyle et de 6 à 14 atomes de C dans la partie aryle, les restes cités pouvant aussi être substitués,

r 1, 2, 3 ou 4 et

r' 1 ou 2,

s, t 0, 1 ou 2, avec $1 \leq s + t \leq 3$,

Z représente un élément non métallique du groupe VA du système périodique des éléments,

M représente un métal, choisi dans les groupes VIIIB, IB ou IIB du système périodique des éléments,

$E^1$,$E^2$ représentent un élément métallique du groupe VA du système périodique des éléments,

$R^1$ à $R^4$ représentent indépendamment l'un de l'autre des radicaux alkyle en $C_2$ à $C_{20}$ linéaires ou ramifiés, cycloalkyle en $C_3$ à $C_{14}$, aryle en $C_6$ à $C_{14}$ ou alkylaryle comportant de 1 à 20 atomes de C dans

la partie alkyle et de 6 à 14 atomes de C dans la partie aryle, l'un des restes $R^1$ à $R^4$ au moins possédant au moins un groupe hydroxyle, amino ou acide, ou un groupe fonctionnel ionique,

$L^1$, $L^2$ représentent des ligands neutres ou à charge formelle,
X représente des anions à une ou plusieurs valences formelles,
p 0, 1, 2, 3 ou 4,
m, n 0, 1, 2, 3 ou 4,

avec p = m x n,
b) un agent de dispersion et éventuellement
c) un composé hydroxylé

et que l'on met en oeuvre en tant qu'au moins un composé oléfiniquement insaturé un composé contenant un élément structurel de la formule générale (III)

$$-CH=CH-Q-Pol_{\pi} \quad (III),$$

ou un mélange d'un composé contenant l'élément structurel de la formule générale (III) et d'un composé oléfiniquement insaturé comportant de 2 à 20 atomes de carbone,
avec

Q étant un groupe organique non polaire, choisi dans le groupe comprenant des radicaux alkyle en $C_1$ à $C_{20}$ linéaires ou ramifiés, cycloalkyle en $C_3$ à $C_{14}$, aryle en $C_6$ à $C_{14}$ ou alkylaryle comportant de 1 à 20 atomes de C dans la partie alkyle et de 6 à 14 atomes de C dans la partie aryle, et
$\pi$ étant in nombre entier différent de 0, de préférence 1, 2, 3 ou 4, et
Pol représentant un reste polaire choisi dans le groupe comprenant

- des radicaux carboxyle, sulfonyle, sulfate, phosphonyle, phosphate, ainsi que leurs sels de métaux alcalins, de métaux alcalino-terreux et/ou d'ammonium,
- des composés d'alcanolammonium, de pyridinium, d'imidazolinium, d'oxazolinium, de morpholinium, de thiazolinium, de quinolinium, d'isoquinolinium, de tropylium, de sulfonium, de guanidinium et de phosphonium ainsi que des composés d'ammonium de la formule générale IV

$$N^+R^6R^7R^8 \quad (IV),$$

dans laquelle
$R^6$, $R^7$ et $R^8$ représentent indépendamment les uns des autres de l'hydrogène et des radicaux alkyle en $C_1$ à $C_{20}$ linéaires ou ramifiés,

ou

- un groupe des formules générales (V), (VI) ou (VII)

$$-(EO)_k-(PO)_l-R^9 \quad (V)$$

$$-(PO)_l-(EO)_k-R^9 \quad (VI)$$

$$-(EO_k/PO_l)-R^9 \quad (VII)$$

dans lesquelles

EO représente un groupe $-CH_2-CH_2-O$

PO représente un groupe $-CH_2-CH(CH_3)-O-$ ou $-CH(CH_3)-CH_2-O-$

k et l sont des valeurs numériques de 0 à 50, k et l n'étant pas simultanément égaux à 0, et

$R^9$ représentent de l'hydrogène ou indépendamment les uns des autres des radicaux alkyle en $C_1$ à $C_{20}$ linéaires ou ramifiés ou $-SO_3H$, ainsi que leurs sels correspondants de métaux alcalins, de métaux alcalino-terreux et/ou d'ammonium.

**2.** Procédé selon la revendication 1, **caractérisé en ce que** l'on entreprend la copolymérisation en présence de

a1) des complexes métalliques de la formule générale (I),
a2) un acide
a3) un agent de dispersion et éventuellement
c) un composé hydroxylé.

**3.** Procédé de production de dispersions aqueuses de copolymères comprenant des copolymères de monoxyde de carbone et d'au moins un composé oléfiniquement insaturé, **caractérisé en ce que** l'on entreprend la copolymérisation de monoxyde de carbone et d'au moins un composé oléfiniquement insaturé en milieu aqueux et en présence de

a1.1) un métal M, choisi dans les groupes VIIIB, IB ou IIB du système périodique des éléments, et qui est présent sous forme de sel ou de sel complexe,
a1.2) un ligand chélate de la formule générale (VIII)

$$(R^1)(R^2)E^1\text{-}G\text{-}E^2(R^3)(R^4) \quad \text{(VIII)},$$

dans laquelle les substituants et indices ont les significations suivantes:

G un système à noyau carbocyclique à 5, 6, ou 7 atomes, sans ou avec un ou plusieurs hétéroatomes, $-(CR^b_2)_r-$, $-(CR^b_2)_s-Si(R^a)_2$, $-(CR^b_2)_t-$, -A-O-B- ou $-A-Z(R^5)-B-$, avec

$R^5$ représentant de l'hydrogène, des groupes fonctionnels non substitués ou substitués par des groupes fonctionnels contenant des atomes des groupes IVA, VA, VIA ou VIIA du système périodique des éléments, ou des radicaux substitués alkyle en $C_1$ à $C_{20}$, cycloalkyle en $C_3$ à $C_{14}$, aryle en $C_6$ à $C_{14}$ ou alkylaryle comportant de 1 à 20 atomes de C dans le radical alkyle et de 6 à 14 atomes de C dans le radical aryle, $-N(R^b)_2$, $-Si(R^c)_3$ ou un reste de formule générale (IX)

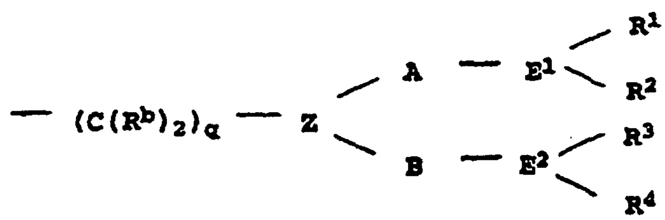

(IX)

dans laquelle

q représente un nombre entier de 0 à 20 et les autres substituants ont, dans la formule (IX), la même signification que dans la formule (II),

A,B représentent $-(CR^b_2)_{r'}-$, ou $-(CR^b_2)_s-Si(R^a)_2$, $-(CR^b_2)_t-$, ou $-N(R^b)-$, un constituant à r', s ou t atomes d'un système de noyau, ou forment ensemble avec Z un constituant à (r' + 1), (s + 1) ou (t + 1) atomes d'un hétérocycle,

$R^a$ représentent indépendamment l'un de l'autre des radicaux alkyle en $C_1$ à $C_{20}$ linéaires ou ramifiés, cycloalkyle en $C_3$ à $C_{14}$, aryle en $C_6$ à $C_{14}$ ou alkylaryle comportant de 1 à 20 atomes de C dans la partie alkyle et de 6 à 14 atomes de C dans la partie aryle, les restes cités pouvant aussi être substitués,

$R^b$ comme $R^a$, avec en plus de l'hydrogène ou $-Si(R^c)_3$,

$R^c$ représentent indépendamment l'un de l'autre des radicaux alkyle en $C_1$ à $C_{20}$ linéaires ou ramifiés, cycloalkyle en $C_3$ à $C_{14}$, aryle en $C_6$ à $C_{14}$ ou alkylaryle comportant de 1 à 20 atomes de C dans la partie alkyle et de 6 à 14 atomes de C dans la partie aryle, les restes cités pouvant aussi être substitués,
r 1, 2, 3 ou 4 et
r' 1 ou 2,
s, t 0, 1 ou 2, avec $1 \leq s + t \leq 3$,
Z représente un élément non métallique du groupe VA du système périodique des éléments,
$E^1$,$E^2$ représentent un élément non métallique du groupe VA du système périodique des éléments,
$R^1$ à $R^4$ représentent indépendamment l'un de l'autre des radicaux alkyle en $C_2$ à $C_{20}$ linéaires ou ramifiés, cycloalkyle en $C_3$ à $C_{14}$, aryle en $C_6$ à $C_{14}$ ou alkylaryle comportant de 1 à 20 atomes de C dans la partie alkyle et de 6 à 14 atomes de C dans la partie aryle, l'un des restes $R^1$ à $R^4$ au moins possédant au moins un groupe hydroxyle, amino ou acide, ou un groupe fonctionnel ionique,

b) un agent de dispersion et éventuellement
c) un composé hydroxylé

et que l'on met en oeuvre en tant qu'au moins un composé oléfiniquement insaturé un composé contenant un élément structurel de la formule générale (III), ou un mélange d'un composé contenant l'élément structurel de la formule générale (III) et d'un composé oléfiniquement insaturé comportant de 3 à 20 atomes de carbone

**4.** Procédé selon la revendication 3, **caractérisé en ce que** l'on entreprend la copolymérisation en présence de

a1.1) un métal M, choisi dans les groupes VIIIB, IB ou IIB du système périodique des éléments, et qui est présent sous forme de sel ou de sel complexe,
a1.2) un ligand chélate de la formule générale (VIII)
a2) un acide,
b) un agent de dispersion et éventuellement
c) un composé hydroxylé.

**5.** Procédé selon les revendications 1 à 4, **caractérisé en ce que** l'on met en oeuvre comme composé contenant d'élément structurel de la formule générale (III) une $\alpha$-oléfine de la formule générale (X)

$$H_2C{=}CH\text{-}Q\text{-}Pol_{\pi} \quad (X).$$

**6.** Procédé selon les revendications 1 à 5, **caractérisé en ce que** le composé hydroxylé c) est un alcool mono- ou polyvalent et/ou un sucre.

**7.** Procédé selon les revendications 2 et 4, **caractérisé en ce que** l'on utilise comme acide un acide de Lewis, choisi dans le groupe formé par le trifluorure de bore, le pentafluorure d'antimoine ou du triarylborane, ou un acide protonique choisi dans le groupe formé par l'acide sulfurique, l'acide p-toluène-sulfonique, l'acide tétrafluoroborique, l'acide trifluorométhane-sulfonique, l'acide perchlorique ou l'acide trifluoracétique.

**8.** Procédé selon les revendications 1 à 7, **caractérisé en ce que** les restes $R^1$ à $R^4$ représentent des unités alkyle en $C_2$ à $C_{20}$ linéaires, ramifiées ou contenant des carbocycles, des unités cycloalkyle en $C_3$ à $C_{14}$, des unités aryle en $C_6$ à $C_{14}$ ou des unités alkylaryle comportant de 1 à 20 atomes de C dans la partie alkyle et de 6 à 14 atomes de C dans la partie aryle, et au moins l'un des restes $R^1$ à $R^4$ possède au moins un groupe hydroxyle, amino, acide carboxylique, acide phosphorique, ammonium ou acide sulfonique.

**9.** Procédé selon les revendications 1 ou 3, **caractérisé en ce que** les restes $R^1$ à $R^4$ représentent des unités alkyle en $C_2$ à $C_{20}$ linéaires, ramifiées ou contenant des carbocycles, des unités cycloalkyle en $C_3$ à $C_{14}$, des unités aryle en $C_6$ à $C_{14}$ ou des unités alkylaryle comportant de 1 à 20 atomes de C dans la partie alkyle et de 6 à 14 atomes de C dans la partie aryle, et au moins l'un des restes $R^1$ à $R^4$ est substitué par au moins un groupe libre d'acide carboxylique ou d'acide sulfonique.

**10.** Procédé selon les revendications 1 à 9, **caractérisé en ce que** l'on utilise comme agent de dispersion b) un

émulsifiant anionique, cationique et/ou non ionique.

**11.** Dispersion aqueuse de copolymère préparée par un procédé selon l'une quelconque des revendications 1 à 10.

**12.** Poudre de copolymère préparée à partir d'une dispersion aqueuse de copolymère selon la revendication 11.

**13.** Utilisation d'une dispersion aqueuse de copolymère selon la revendication 11 comme liant dans des adhésifs, des masses d'étanchéité, des enduits synthétiques et des apprêts.

**14.** Utilisation de poudre de copolymère selon la revendication 12 comme liant dans des adhésifs, des masses d'étanchéité, des enduits synthétiques et des apprêts, ainsi que pour la modification de liants minéraux ou d'autres matières plastiques.